# EUROPÄISCHE PATENTSCHRIFT

(11) **EP 3 297 569 B1**
(45) Veröffentlichungstag und Bekanntmachung des Hinweises auf die Patenterteilung: **18.03.2020**
(21) Anmeldenummer: 16727145.1
(22) Anmeldetag: 20.05.2016
(51) Int. Cl.: A61C 8/00

(54) **INSERTIONSSET FÜR EIN ENOSSALES EINZELZAHNIMPLANTAT**
INSERTION SET FOR AN ENOSSAL SINGLE-TOOTH IMPLANT
KIT D'INSERTION POUR UN IMPLANT UNITAIRE ENDO-OSSEUX

(30) Priorität: 21.05.2015 DE 102015108098; 17.06.2015 EP 15172612
(43) Veröffentlichungstag der Anmeldung: 28.03.2018
(73) Patentinhaber: Nobel Biocare Services AG, 8302 Kloten (CH)
(72) Erfinder: DÜRR, Walter, 75196 Remchingen (DE)
(74) Vertreter: Nobbe, Matthias
(86) Internationale Anmeldenummer: PCT/EP2016/061503
(87) Internationale Veröffentlichungsnummer: WO 2016/185045

(56) Entgegenhaltungen:
- EP-A1- 2 347 729
- EP-A1- 2 829 250
- WO-A1-98/52488
- WO-A1-2015/090280
- DE-A1- 19 509 762
- US-A1- 2007 059 666
- US-A1- 2009 111 072

## Beschreibung

Die Erfindung betrifft ein Insertionsset für ein enossales Einzelzahnimplantat mit den Merkmalen der Patentansprüche 1 und 2 sowie Weiterbildungen davon.

Bei einem Einzelzahnimplantat, wie es aus der DE 40 28 855 C2 bekannt und auch Gegenstand der DE 195 09 762.9-32 ist, erfolgt die Verdrehsicherung in der Weise, dass die Grundkörper-Formschlusselemente am Boden der Ringausnehmung des Grundkörpers und die Distanzhülsen-Formschlusselemente, die hierzu komplementär sind, am zervikalen Stirnrand des Zentrierbundes der Distanzhülse vorgesehen sind. Fertigungstechnisch sind derartige Formschlusselemente nur verhältnismäßig schwierig herzustellen, wobei es ferner in manchen Anwendungsfällen nicht sonderlich günstig ist, dass nicht die volle Tiefe der Ringausnehmung bzw. des Zentrierbundes zum Zentrieren, Fixieren und Sichern der Distanzhülse relativ zum Grundkörper zur Verfügung steht.

Auch bei einem anderen Dentalimplantat, wie es aus der DE 37 35 378 vorgesehen ist, treten Schwierigkeiten ähnlicher Art auf, die darauf beruhen, dass auch dort die Formschlusselemente des Grundkörpers mit Abstand von dessen koronalen Stirnrand innerhalb einer Blindbohrung des Grundkörpers liegen.

Aus der DE 41 27 839 A1 ist ein Implantat-Grundkörper bekannt, dessen zentrale Ringausnehmung ein Formschlusselement aufweist, welches sich unmittelbar an den koronalen Stirnrand des Grundkörpers anschließt, wobei das Formschlusselement nutenförmig gestaltet ist und das in dem Grundkörper einzusetzende Halteteil eine dazu komplementäre Gestaltung aufweist. Ein gesonderter Implantatpfosten oder Halteschraube ist dabei nicht vorgesehen.

Aus der DE 195 34 979 C1 ist ein Einzelzahnimplantat bekannt, bei dem die Formschlusselemente des Grundkörpers unmittelbar im Anschluss an dessen koronalen Stirnrand mit entsprechender Anordnung und Ausbildung der hierzu komplementären Abutment-Formschlusselemente angeordnet sind. Dadurch, dass die gesamte Tiefe der Ringausnehmung des Grundkörpers für die Zentrierung und Führung des Abutments zur Verfügung steht, soll sich eine deutlich verbesserte Stabilität der Verbindung zwischen Distanzhülse und Grundkörper bei einem größeren Gestaltungsspielraum in der Art der Teilung sowie der Formgebung der Formschlusselemente ergeben.

EP2829250 und WO2015/090280 (Art. 54(3) EPC) offenbaren Implantatsysteme.

Bei allen derartigen Zahnimplantaten wird die Implantation in der Regel so durchgeführt, dass zunächst der Knochen vorzugsweise nur an der geplanten Implantatposition, freigelegt wird, um den Knochen optimal für eine Implantation vorbereiten zu können, und dabei wird oft ein Zahnfleischlappen (Mucoperiost oder Mucogingival) präpariert. Bei guten Knochenverhältnissen und ausreichend breiter fixierter Gingiva kann ein Zahnimplantat auch ohne diese Freilegung / Aufklappung des Zahnfleisches mittels Zahnfleischausstanzung in einer transgingivalen Implantation gesetzt werden. Mit speziellen Bohrern wird dann das Implantatbett aufbereitet, wobei eine Bohrschablone verwendet werden kann, um die aus prothetischer Sicht optimale Position und genaue Bohrrichtung für die optimale Position und Ausrichtung des Implantates zu gewährleisten. Das Implantat wird dann passgenau in den Kieferknochen eingebracht, wobei die so genannte Primärstabilität (erste mechanische Stabilität) einer der wichtigen Erfolgsfaktoren für die Osseointegration ist.

Dabei unterscheidet man beim Setzen der Implantate zwischen einer einphasigen Modalität mit offener Einheilung und einer zweiphasigen Modalität mit geschlossener Einheilung. Das Implantat (Grundkörper) wird auf das nach Herstellervorgaben angegebene Niveau relativ zum freigelegten Knochenniveau gesetzt. Bei der zweiphasigen Vorgehensweise wird der präparierte Lappen über dem oberen Ende des Grundkörpers, verschlossen beispielsweise durch eine Verschlusschraube, vernäht. Nach der Einheilung wird das Implantat in einem zweiten Eingriff freigelegt, um mit der prothetischen Versorgung zu beginnen. Bei Implantationen, die mit Knochen aufbauenden Maßnahmen verbunden sind, bietet diese zweizeitige Vorgehensweise Schutz vor äußeren Einflüssen.

Bei der einphasigen Vorgehensweise heilen Implantate "offen" ein. Das bedeutet, dass ein Implantat nach dem Setzen während der Einheilung aus der Schleimhaut herausragen kann und in der Regel eine temporäre Zahnkrone oder einen Gingivaformer trägt. Der Implantatkopf kann dann oberhalb des Schleimhaut-Niveaus liegen, und ein Eingriff für die Freilegung des Implantates entfällt.

Beiden Vorgehensweisen ist gemeinsam, dass der Grundkörper in den Kieferknochen des Patienten zumeist durch Einschrauben in eine vom Implantologen gesetzte Bohrung eingebracht wird. Nach der Osseointegration wird in einer nächsten Stufe ein Abutment in den Grundkörper eingesetzt und mittels einer Halteschraube am Grundkörper fixiert. Auf dem Abutment wird in der Regel eine Krone befestigt. Die Phase der Osseointegration dauert je nach Patient oft bis zu mehreren Monaten, und dabei ist es für ein störungsfreies Einwachsen wichtig, dass der Grundkörper in der ersten Stufe der implantologischen Maßnahmen möglichst keimfrei an den Implantationsort gebracht und während der Implantation auch weiterhin so keimfrei gehalten wird. Hierzu können insbesondere während des Einbringens des Grundkörpers in den Kiefer und vor Verschluss des Grundkörpers besondere Maßnahmen zur Keimfreiheit notwendig sein, um eine störungsfreie Osseointegration zu gewährleisten.

Die Aufgabe der Erfindung besteht daher darin, das Handling bei der Einbringung eines Zahnimplantats zu verbessern und so ein verbessertes System für die Einbringung bereitzustellen und dabei als Folge die Osseointegration zu verbessern. So kann das Infektionsrisiko vermindert und der Entwicklung einer pathologischen bakteriell bedingten Desintegration vorgebeugt werden und infolgedessen der Einwachsvorgang, der sich nach Abschluss der Remodellingvorgänge bis zur Endfestigkeit des Implantates im Kiefer über einige Monate erstrecken kann, unterstützt werden.

Erfindungsgemäß wird diese Aufgabe bei einem gattungsgemäßen Insertionsset für ein enossales Einzelzahnimplantat durch die Kombination der Merkmale gemäß den Patentansprüchen 1 und 2 gelöst. Besondere Ausführungsformen der Erfindung sind Gegenstand der Nebenansprüche und der Unteransprüche.

So betrifft die vorliegende Erfindung ein Insertionsset für ein enossales Einzelzahnimplantat für einen festsitzenden Zahnersatz, mit
- einem im Wesentlichen zylindrischen, in eine in einen Kieferknochen eingebrachte Bohrung einsetzbaren Grundkörper mit einer Ringausnehmung und mit einer koaxial zur Ringausnehmung angeordneten Bohrung, die apikal ein Gewinde zur Festlegung einer Halteschraube aufweist;
- einer in die Ringausnehmung des Grundkörpers einsetzbaren Eindrehbasis, die eine die Eindrehbasis koaxial zur Ringausnehmung durchdringende Bohrung zur Aufnahme einer Halteschraube aufweist;
- eine Halteschraube mit einem apikalen Außengewinde und einem koronalen Schraubenkopf, wobei die Halteschraube in die Bohrung der Eindrehbasis einsetzbar und in das Gewinde des Grundkörpers einschraubbar ist;
- einem Eindrehkopf, der mit der Eindrehbasis in Eingriff bringbar ist und der eine koaxial zur Ringausnehmung angeordnete Bohrung aufweist, und
- einem Halteschaft, der in die Bohrung des Eindrehkopfes einsetzbar einenends an der Halteschraube festlegbar ist und anderenends einen Ansatz für ein dentales Winkelstück aufweist.

Bei Verwendung des erfindungsgemäßen Insertionssets kann bei einer zweiphasigen Einheilung so vorgegangen werden, daß in der ersten chirurgischen Phase nach Setzen des Implantates der Eindrehkopf und der Halteschaft entfernt werden und die Eindrehbasis mit einer beispielsweise gespritzten Verschlussschraube verschlossen wird. Anschließend wird der Insertionsbereich mittels eines Schleimhautperiostlappens/Mukogingivallappens verschlossen. In der zweiten chirurgischen Phase wird die Schleimhaut über dem Implantat eröffnet, und der Eindrehkopf kann verschraubt werden. Die Geometrie des Eindrehkopfes mit lateralen Flächen eignet sich auch als Scanbody.

Indikationsabhängig kann der Eindrehkopf unterhalb des Werkzeugansatzes auch abgetrennt und z.B. eine temporäre Krone oder eine Bisskappe zur Markierung der Implantatposition in einer Bissplatte angebracht werden. Alternativ kann nach Verschrauben des Eindrehkopfes eine Abdruckkappe aufgesetzt werden, um eine Abdrucknahme mit geschlossenem Löffel zu ermöglichen. Zur Abdrucknahme mit einem offenem Löffel kann ein Abdruckpfosten eingeschraubt werden.

Die Grundkörper-Einbringbasis/körper-Verbindung wird in jedem Fall erst dann eröffnet, nachdem eine ausreichende Implantat-Knochen-Verbindung sowie ein epitheliales Attachment und subepitheliales Bindegewebsattachment ausgebildet wurden.

Das erfindungsgemäße Insertionsset zeichnet sich auch dadurch aus, daß es eine Trennung zwischen Indexierung (Positionierung) und Kraftübertragungselementen zum Eindrehen des Grundkörpers ermöglicht, die im Stand der Technik nicht so gegeben ist, eine direkte Kraftübertragung vom Winkelstückkopf zum Eindrehkopf/Eindrehkörper (ein/zweiteilig) und von dort zu den Kraftübertragungselementen auf den Grundkörper ermöglicht, Indexierungselemente, beispielsweise in Form von Federstegen, nicht in Kontakt mit den Kraftübertragungselementen kommen und so für das spätere Einbringen des Abutments höchste Präzision gewährleistet ist. Dabei kann der Eindrehkopf/Eindrehkörper (ein/zweiteilig) auch als provisorisches Abutment nutzbar sein, und es ist eine exakte Abformung (3D-Position) mittels Intraoralscanners und damit Weiterverarbeitung der Daten mit CAD/CAM-Technologie möglich.

Die vorliegende Erfindung betrifft ebenso die Unterkombination des erfindungsgemäßen Insertionssets aus
- dem im Wesentlichen zylindrischen, in eine in einen Kieferknochen eingebrachte Bohrung einsetzbaren Grundkörper mit einer Ringausnehmung und mit einer koaxial zur Ringausnehmung angeordneten Bohrung, die apikal ein Gewinde zur Festlegung einer Halteschraube aufweist;
- der in die Ringausnehmung des Grundkörpers einsetzbaren Eindrehbasis, die eine die Eindrehbasis koaxial zur Ringausnehmung durchdringende Bohrung zur Aufnahme einer Halteschraube aufweist; und
- der Halteschraube mit einem apikalen Außengewinde und einem koronalen Schraubenkopf, wobei die Halteschraube in die Bohrung der Eindrehbasis einsetzbar und in das Gewinde des Grundkörpers einschraubbar ist;

Die Ringausnehmung des Grundkörpers umfasst einen apikalen Führungsabschnitt, einen Formschlussabschnitt und einen koronalen Endabschnitt, wobei die Eindrehbasis einen apikalen Führungsabschnitt, einen Formschlussabschnitt und einen koronalen Endabschnitt, die mit den Abschnitten des Grundkörpers formkomplementär korrespondieren, umfasst.

Der Formschlussabschnitt des Grundkörpers und der Formschlussabschnitt der Eindrehbasis weisen zueinander formkomplementäre Eindrehelemente, die beim Einsetzen der Eindrehbasis in den Grundkörper miteinander in Eingriff gebracht werden, auf, wobei die Eindrehbasis und der Grundkörper in Eingriffsposition der zueinander formkomplementären Eindrehelemente zueinander drehfest festgelegt sind. Wenn erfindungsgemäß von Eindrehelementen als Formschlusselementen gesprochen wird, können diese je nach Ausgestaltung der Elemente auch einen Kraftschluss oder Form- und Kraftschluss bewirken. Der Vereinfachung halber wird im Rahmen der Erfindung von Formschluss gesprochen.

Die Eindrehbasis weist am koronalen Ende einen Formschlussabschnitt mit Eindrehelementen auf, die mit Eindrehelementen des Eindrehkopfes miteinander in Eingriff gebracht werden können, wobei die Eindrehbasis und der Eindrehkopf in Eingriffsposition der zueinander formkomplementären Eindrehelemente zueinander drehfest festgelegt sind.

In einer Ausführungsform des erfindungsgemäßen Insertionssets für ein enossales Einzelzahnimplantat können die Eindrehbasis und der Eindrehkopf auch einstückig, zusammen Eindrehkörper genannt, ausgebildet sein. Ein erfindungsgemäßes Insertionsset mit einem solchen einteiligen Eindrehkörper kann vorteilhaft für eine einphasige Einheilung verwendet werden. Dies ermöglicht eine ungestörte Ausbildung des Knochen-Implantat-Verbundes, des subepithelialen Bindegewebsattachment und des epithelialen Attachments. Das sterile Einbringen der Innenkonfiguration sichert Sterilität während des Einheilvorganges. Eine Kürzung des Eindrehkörpers, bzw. des Eindrehkopfes unterhalb des koronalen Endes, beispielsweise an einer umlaufenden Ringnut, und ein Verschluss der Bohrung im Eindrehkopf/Eindrehkörper mit einer Gingivakappe ist dabei möglich, so daß eine Anpassung an die jeweiligen Kieferverhältnisse oder die Anforderungen des Implantologen möglich ist.

Bei einer zweistückigen Ausführung von Eindrehbasis und Eindrehkopf ist zur Festlegung der Eindrehbasis und des Grundkörpers zueinander oder bei einer einstückigen Ausführung von Eindrehbasis und Eindrehkopf, gemeinsam Eindrehkörper genannt, zur Festlegung von diesem Eindrehkörper und des Grundkörpers zueinander erfindungsgemäß eine Halteschraube mit einem apikalen Außengewinde und einem koronalen Schraubenkopf vorgesehen, wobei die Halteschraube in die Bohrung der Eindrehbasis oder des Eindrehkörpers einsetzbar und mit dem apikalen Außengewinde in das apikale Gewinde des Grundkörpers einschraubbar ist. Dabei kann die Halteschraube mit dem apikalen Ende des Schraubenkopfes, das ringförmig oder konisch ausgebildet sein kann, auf dem ringförmigen oder konischen Innenrand der Bohrung der Eindrehbasis oder des Eindrehkörpers zur Anlage kommen und diese drehfest festlegen.

Zur Festlegung des Halteschaftes oder einer weiteren Halteschraube, die zur Festlegung des Eindrehkopfes auf der Eindrehbasis angeordnet sein kann, kann der Schraubenkopf der Halteschraube, mit der die Eindrehbasis oder der Eindrehkörper gegenüber dem Grundkörper festgelegt werden kann, einen Innenmehrkant und bevorzugt ein im Innenmehrkant angeordnetes Innengewinde aufweisen, in das der Halteschaft oder die weitere Halteschraube eingeschraubt werden kann.

Um bei einer zweistückigen Ausführung von Eindrehbasis und Eindrehkopf eine ebene Stirnfläche für den Ansatz des Eindrehkopfes auszubilden, kann der Schraubenkopf der Halteschraube in der Gebrauchsposition in der Eindrehbasis versenkt sein. Dabei kann zwischen Schraubenkopf und Eindrehbasis eine Ringnut ausgebildet sein, die einen Abschnitt des Eindrehkopfes zur Zentrierung und Führung aufnehmen kann.

Erfindungsgemäß können je nach Ausführung von Eindrehbasis und Eindrehkopf die Halteschraube und der Halteschaft einstückig ausgebildet sein. Ebenso kann der Halteschaft zweistückig ausgebildet sein, insbesondere in Form der weiteren o.a. Halteschraube, die zur Festlegung des Eindrehkopfes auf der Eindrehbasis angeordnet sein kann, und eines verkürzten Halteschaftes, was insbesondere bei vertikal beengten Kieferverhältnissen vorteilhaft sein kann.

Bei Verwendung des erfindungsgemäßen Insertionssets für ein enossales Einzelzahnimplantat für einen festsitzenden Zahnersatz ist der Halteschaft vorteilhaft so ausgebildet, dass er in Gebrauchsposition Grundkörper, Eindrehbasis und Eindrehkopf, einteilig oder zweiteilig, insbesondere die zueinander korrespondierenden Eindrehelemente, in Eingriff hält.

Als zueinander korrespondierende Eindrehelemente sind erfindungsgemäß jeweils paarweise an Grundkörper koronal und Eindrehbasis - oder Eindrehkörper - apikal, sowie an Eindrehbasis koronal und Eindrehkopf apikal als formkomplementäre Paare von Innenkant-Außenkant, erfindungsgemäß auch Innenkantfläche-Außenkantfläche oder Innenfläche-Außenfläche bezeichnet, ausgebildet, die nach Art eines Drei-, Vier-, Fünf- oder Sechskantes, oder Mehrkantes, den Form/Kraftschluss ermöglichen und somit die Übertragung des Drehmomentes vom Werkzeug - hand- oder motorbetrieben - auf den Grundkörper sicherstellen. Alternativ können die zueinander korrespondierenden Eindrehelemente auch als formkomplementäre Paare von Nocken und Ausbuchtungen, oder als formkomplementäre Paare von Morsekegel und Morsekonus ausgebildet sein, wobei auch unterschiedliche formkomplementäre Eindrehelementpaare im erfindungsgemäßen Insertionsset verwendet werden können. So können an Grundkörper koronal und Eindrehbasis apikal Innenkant-Außenkant-Paare und an Eindrehbasis koronal und Eindrehkopf apikal ein Morsekegel-Morsekonus-Paar vorgesehen sein.

Die Eindrehelemente können jeweils besonders in Form von zwei oder mehr, bevorzugt drei, umfangsmäßig gleichmäßig beabstandet angeordneten "koaxialen" Planflächen (Innenmehrkant) in der Ringausnehmung am Grundkörper und in Form von zwei oder mehr, bevorzugt drei, umfangsmäßig gleichmäßig beabstandet angeordneten "koaxialen" Planflächen (Außenmehrkant als Zwei-, Drei-, Vier- oder Mehrkantkopf) an der Eindrehbasis ausgebildet sein.

Zwischen je zwei Eindrehelementen wie den Innenkant-Flächen oder Nocken (als Form- und/oder Kraftschlusselemente) kann umfangsmäßig jeweils ein Übergangsbereich vorgesehen sein, der in Form eines radial nach innen gerichteten Steges oder Vorsprunges (im Mittenbereich) ausgebildet sein kann. Dabei weist ein solcher Steg/Vorsprung einen radial nach innen gerichteten Abschnitt, die auch als Fläche ausgebildet sein kann, mit Stegseitenflächen auf, die zu den Eindrehelementen beidseits benachbart sind, bzw. in diese übergehen. Ein als Außenkantfläche ausgebildetes Eindrehelement kann so ausgebildet sein, daß die Planfläche der Außenkantfläche zumindest in Eindrehrichtung, vorzugsweise in beiden Drehrichtungen, mit einem seitlichen Vorsprung versehen ist, der beim Eindrehen des Grundkörpers in den Kiefer an der korrespondierenden Stegseitenfläche, nicht jedoch an der Stegspitze zur Anlage kommt und zusätzlich die Übertragung des Drehmomentes vom Eindrehwerkzeug auf den Grundkörper unterstützt und gleichzeitig das toleranzbedingte Spiel zwischen den Eindrehelementen verringert und gleichzeitig als Anschlag fungiert. Dabei soll insbesondere bei den Stegen am Grundkörper Kontakt zu der Spitze/Mittenbereich des Steges vermieden werden, um eine Beschädigung des Spitzen/Mittenbereiches des Steges zu vermeiden. Die Position der Stege, die radial nach innen gerichtet in der Bohrung vom Grundkörper angeordnet sein können, bzw. der korrespondierenden Ausnehmungen für die Stege in dem korrespondierenden Bauteil kann nach außen über ein oder mehrere Markierungen am Grundkörper, der Eindrehbasis, dem Eindrehkopf und/oder dem Eindrehkörper sichtbar gemacht werden. Als solche Markierungen können auch Scanbodymarkierungen wie Flächen des Scanbodies dienen, der die digitale Erfassung der Implantat- bzw. Laborimplantatposition relativ zur Restbezahnung und zum Weichgewebe erlaubt.

Ein Einzelzahnimplantat, das unter Verwendung des erfindungsgemäßen Insertionssets zum Eindrehen des Grundkörpers und nach anschließendem Einsetzen eines Abutments in dem Kieferknochen angeordnet werden kann, umfasst somit einen Grundkörper, ein in den Grundkörper einsetzbares Abutment sowie eine den Grundkörper und das Abutment durchdringende Halteschraube, die die Position des Abutments gegenüber dem Grundkörper festlegt und in einen am apikalen Ende des Grundkörpers vorgesehenen Gewindeabschnitt einschraubbar ist.

Der Grundkörper weist wie beschrieben eine Ringausnehmung auf, in die nach Einheilung des Grundkörpers im Kiefer und nach Entfernen der Halteschraube und der Eindrehbasis das Abutment einsetzbar ist. Die Ringausnehmung kann dabei einen Führungsabschnitt am apikalen Ende der Ringausnehmung, einen Formschlussabschnitt und einen koronalen Endabschnitt umfassen, an die entsprechende Abschnitte des Abutments - und der Eindrehbasis - komplementär angepasst sind. Der koronale Endabschnitt im Grundkörper ist vorzugsweise zylindrisch ausgebildet, an den der entsprechende Abschnitt im Abutment angepasst ist. In den Formschlussabschnitten sind zu den Eindrehelementen unterschiedliche Formschlusselemente wie Stege und Nuten angeordnet, die die relative Bewegung von Abutment und Grundkörper in Umfangsrichtung verhindern. Dabei ist die Ausführung des Grundkörpers mit axialen Stegen, die in axiale Nuten am Abutment eingreifen, bevorzugt.

Die Führungsabschnitte an Grundkörper und Abutment sind zueinander jeweils nach Art einer Spielpassung ausgebildet. So wird eine zuverlässige Führung der Eindrehbasis bzw. Abutments im Grundkörper ermöglicht. Dabei können für den Fall, dass Führungsabschnitt und Formschlussabschnitt als zwei distinkte Abschnitte ausgebildet sind, beim Einschieben der Eindrehbasis bzw. Abutments die jeweiligen Führungsabschnitte an Grundkörper/Eindrehbasis oder an Grundkörper/Abutment in Eingriff kommen, bevor der Formschlussabschnitt in Eingriff gebracht wird.

Bei einer solchen Spielpassung ist das radiale Höchstmaß des Führungsabschnittes der Eindrehbasis bzw. Abutments kleiner als das radiale Mindestmaß des Führungsabschnittes des Grundkörpers. Dabei sind die Toleranzfelder so gewählt, dass das Spiel, also der maximale radiale Abstand zwischen Mindestmaß des Führungsabschnittes der Eindrehbasis bzw. Abutments und Höchstmaß des Führungsabschnittes des Grundkörpers, einen für Einschubwiderstand und Führung vertretbaren Wert erhält.

Nach Eindrehen des Grundkörpers in den Kiefer und Entfernen der Eindrehbasis oder des Eindrehkörpers ist ein Abutment umfangsmäßig ausrichtbar in den Grundkörper einsetzbar, wobei Formschlusselemente wie Federstege an Grundkörper und Nuten an Abutment miteinander in Eingriff gebracht werden können und dabei Grundkörper und Abutment rotationsgesichert zueinander festlegen. Anschließend werden Grundkörper und Abutment über eine Halteschraube in der zueinander festgelegten Position fixiert.

Der Formschlussabschnitt des Grundkörpers und der Formschlussabschnitt des Abutments sind in der Form so aufeinander abgestimmt, dass das Abutment in die Ausnehmung des Grundkörpers so eingesetzt werden kann, dass die jeweiligen Stege und Nuten miteinander in Eingriff gebracht werden können und so eine Bewegung in Umfangsrichtung verhindern. Die jeweiligen Formschlussabschnitte können als hohlzylindrische Bereiche der Ringausnehmung, auch mit Abschnitten mit unterschiedlichen Durchmessern, im Grundkörper und dazu jeweils korrespondierendem außenzylindrischem Abschnitt oder Abschnitten des Abutments gestaltet sein.

Die erfindungsgemäße Ausgestaltung des enossalen Einzelzahnimplantates läßt die Verwendung von verschiedenen Materialien und Materialkombination zu, die aus der Gruppe der Metalle, der metallischen Legierungen, keramischen Materialien und Kombinationen davon ausgewählt werden können.

Dabei kann der Grundkörper bevorzugt aus einem Material, das aus dieser Gruppe der Metalle, der metallischen Legierungen, keramischen Materialien und Kombinationen davon ausgewählt werden. Bevorzugt besteht das eingesetzte Implantatmaterial und Insertionsset insgesamt aus metallischen Materialien wie Reintitan oder metallischen Titanlegierungen, Chrom/Nickel/Aluminium/Vanadium/ Kobalt-Legierungen (z.B. TiAIV4, TiAIFe2,5), Edelstählen (z.B. V2A, V4A, Chrom-Nickel 316L), keramischen Materialien wie Hydroxylapatit, Aluminiumoxid, Zirkondioxid oder aus einer Kombination davon, bei der das metallische Material als Verbundmaterial mit keramischem Material vorliegt.

Die folgende detailliertere Beschreibung der Elemente der Erfindung gilt insoweit jeweils für alle Ausführungsformen der Erfindung, sofern nicht Gegenteiliges festgehalten ist.

Erfindungsgemäß erlaubt der axial apikal zum Formschlußabschnitt vorgesehene und bevorzugt zylindrisch ausgeführte Führungsabschnitt eine zuverlässige und stabile Fixierung der Eindrehbasis oder später des Abutments im Grundkörper durch die Halteschraube, da die jeweiligen Bauteile über Führungsabschnitt mit einer Spielpassung nach Art einer Rohr-in-Rohr-Lagerung gelagert sind. Die radialen Innendurchmesser von Führungsabschnitt im Grundkörper und der Außendurchmesser im Abutment sind so gewählt, dass die Wandstärke im Grundkörper ausreichend ist, um bei lateraler oder winkliger Belastung des Implantates während des Kauvorganges Verformungen der Grundkörperwände zu vermeiden.

Erfindungsgemäß sind die zueinander komplementären Formschlusselemente an Grundkörper und Eindrehbasis jeweils in Form einer Vaterteil-Mutterteil-Verbindung ausgebildet, wobei das/die Vaterteil(e) bevorzugt an dem Grundkörper angeordnet ist/sind. Aufgrund der so gewählten Anordnung ist infolge der Vermeidung einer Verringerung der Wandstärke des Grundkörpers auch bei keramischen Werkstoffen eine präzise Kraftübertragung möglich, die die Verwendung von voll- oder teilkeramischem Grundkörper neben den bekannten Metallen und legierten Materialien, ermöglicht.

Erfindungsgemäß kann das Vaterteil-Formschlusselement jeweils die Form eines sich parallel zur Längsachse des Grundkörpers erstreckenden Federsteges haben, der in jeweils ein korrespondierendes Mutterteil am anderen Bauteil, vorzugsweise eine Nut, verdrehgesichert eingreift. Die Formschlusselemente können durch mechanische Bearbeitung wie Fräsen, Bohren etc. aus den Bauteilen Grundkörper und Abutment herausgearbeitet werden.

Der Formschlussabschnitt kann zylindrisch ausgebildet sein. Bei einer zylindrischen Ausbildung ist der Formschlussabschnitt an der Eindrehbasis oder Abutment in der Form eines zylindrischen Abschnittes ausgebildet, der mit seinem Außendurchmesser der hohlzylindrischen Bohrung am Grundkörper in der Länge und dem Durchmesser angepasst ist.

Der Federsteg kann erfindungsgemäß vorteilhaft in Form einer gefrästen Nase, Steges oder eines jeweils in einer Blindbohrung (Haltebohrung) gehaltenen Stiftes ausgebildet sein. Der Stift kann einen, bevorzugt kreisförmigen, oder regelmäßig- oder unregelmäßigpolygonalen Querschnitt haben, von dem ein Querschnittssegment aus der Nut in der konischen Wandung radial zur Richtung der Längsmittelachse, je nach relativer Lage von Vater- bzw. Mutterteil, des Grundkörpers hervorsteht und bis über die maximale axiale Länge des Formschlussabschnittes den Federsteg ausbilden kann. In der einfachsten Form kann ein Stift eine zylindrische Form haben und beispielsweise in einer Drahtziehmaschine hergestellt sein.

Für den Implantatpfosten/Halteschraube ist in der Blindbohrung apikal von dem konischen Formschluss- und Zentrierabschnitt des Grundkörpers ein Innengewinde vorgesehen, wobei die Halteschraube das Abutment auch vollständig durchsetzt.

Es ist auch ein Aspekt der vorliegenden Erfindung, dass - neben einer vereinfachten mechanischen Bearbeitung der Bauteile und dem vereinfachten Handling - die Bedingungen während der einphasigen oder zweiphasigen Implantation besonders in der Einheilphase möglichst keimfrei im Grundkörper gehalten werden können und so auch eine ausgewogene mechanische Stabilität bei der Einbringung des Implantates in den Kiefer und dessen Gebrauch beim Kauvorgang erzielt werden kann, was bei den im Stand der Technik bekannten Systemen so nicht gegeben ist.

Zur Bereitstellung des erfindungsgemäßen Insertionssets kann die Eindrehbasis oder der Eindrehkörper in die Ringausnehmung des Grundkörpers eingesetzt werden, und dabei werden die formkomplementären Eindrehelemente von Grundkörper und Eindrehbasis (apikal) oder Eindrehkörper miteinander in Eingriff gebracht. Mittels der (apikalen) Halteschraube kann die Eindrehbasis im Grundkörper fixiert werden.

Bei der zweiteiligen Form von Eindrehbasis und Eindrehkopf wird der Eindrehkopf auf die Eindrehbasis aufgesetzt und die formkomplementären Eindrehelemente an Eindrehbasis (koronal) / Eindrehkopf im jeweiligen Formschlussabschnitt miteinander in Eingriff gebracht. Der Eindrehkopf kann dann mittels des Halteschaftes oder mittels einer zweiten Halteschraube und Halteschaft an der ersten (apikalen) Halteschraube drehfest festgelegt werden.

Bei der einteiligen Form von Eindrehbasis und Eindrehkopf wird der Eindrehkörper auf den Grundkörper aufgesetzt und dabei die formkomplementären Eindrehelemente an Grundkörper und Eindrehkörper im jeweiligen Formschlussabschnitt miteinander in Eingriff gebracht. Der Eindrehkörper kann dann über die (apikale) Halteschraube und Halteschaft oder, je nach Ausführung, über eine zweite Halteschraube und Halteschaft drehfest an der ersten Halteschraube festgelegt werden.

Nach Festlegen des Halteschaftes kann, bei der einteiligen oder zweiteiligen Form von Eindrehbasis und Eindrehkopf, das erfindungsgemäße Insertionsset sterilisiert werden, vorteilhaft mittels -Sterilisierung, und in einer Sterilverpackung für die Verwendung aufbewahrt werden.

Zur Verwendung entnimmt der Implantologe das Insertionsset der Sterilverpackung und setzt eine Mehrkantnuss auf den Halteschaft auf, die den Mehrkant am koronalen Ende von Eindrehkopf oder Eindrehkörper umfasst und setzt den Halteschaft (mit Mehrkantnuss) dann so in das Eindrehwerkzeug ein, daß das am koronalen Ende des Halteschaftes vorhandene Sicherungselement, wie eine umlaufende Ringnut, in eine Halterung am Eindrehwerkzeug und gleichzeitig die Mehrkantnuss in das Kraftübertragungsbauteil am Eindrehwerkzeug eingreifen kann. Der Implantologe kann dabei unter Berücksichtigung der Bedingungen im Kiefer des Patienten dann entscheiden, ob er ein einphasiges oder zweiphasiges Implantationsverfahren wählt und danach die Art des Insertionssets mit einteiligen Eindrehkörper oder mit zweiteiliger Variante mit Eindrehbasis und Eindrehkopf bestimmen. In jedem Fall wird gewährleistet, daß der Implantologe ein geschlossenes steriles System von Grundkörper und Eindrehbasis/Eindrehkörper in den Kiefer des Patienten einbringen kann und so optimale Voraussetzungen für ein Einwachsen des Implantates in den Kiefer schafft.

Nachstehend sind Ausführungsbeispiele des erfindungsgemäßen Insertionssets und seiner Bauteile anhand der schematischen Zeichnungen im Einzelnen erläutert. Dabei zeigen:
**Fig. 1A** ein Ausführungsbeispiel eines erfindungsgemäßen Insertionssets im axialen Längsschnitt entlang der in der Draufsicht rechts gezeigten; diese Ausführung ist hauptsächlich für die gedeckte Einheilung geeignet.
**Fig. 1B** ein weiteres Ausführungsbeispiel eines erfindungsgemäßen Insertionssets im axialen Längsschnitt entlang der in der Draufsicht rechts gezeigten Ebene; diese Ausführung erlaubt sowohl eine gedeckte als auch eine transgingivale Einheilung.
**Fig. 1C** ein weiteres Ausführungsbeispiel eines erfindungsgemäßen Insertionssets im axialen Längsschnitt entlang der in der Draufsicht rechts gezeigten Ebene; diese Ausführung ist hauptsächlich für eine transgingivale Einheilung geeignet..;
**Fig. 1D** eine Querschnittsansicht des Ausführungsbeispiel aus Fig 1C auf Höhe der Grundkörper-Eindrehkörper-Verbindung in der in der Draufsicht rechts gezeigten Ebene B-B, sowie eine Detailansicht davon.
**Fig. 2** ein Ausführungsbeispiel eines im erfindungsgemäßen Insertionsset wie in Fig. 1A, 1B oder 1C gezeigt verwendeten Implantat-Grundkörpers im axialen Längsschnitt entlang der in der Draufsicht rechts gezeigten Ebene, sowie jeweils eine Draufsicht von unten und von oben auf den Grundkörper;
**Fig. 3** ein Ausführungsbeispiel einer im erfindungsgemäßen Insertionsset verwendeten und wie in Fig. 1A oder 1B gezeigten Eindrehbasis im axialen Längsschnitt entlang der in der Draufsicht rechts gezeigten Ebene, sowie jeweils eine Draufsicht von unten und von oben auf die Eindrehbasis und je eine Schnittansicht in den in der Draufsicht rechts gezeigten Ebenen B-B und C-C;
**Fig. 4** ein Ausführungsbeispiel einer im erfindungsgemäßen Insertionsset wie in Fig. 1A und 1B gezeigt verwendeten Halteschraube - zur Festlegung der Eindrehbasis in dem Grundkörper - im axialen Längsschnitt entlang der in der Draufsicht rechts gezeigten Ebene, sowie jeweils eine Draufsicht von unten und von oben auf die Halteschraube;
**Fig. 5** ein Ausführungsbeispiel eines im erfindungsgemäßen Insertionsset wie in Fig. 1A und 1B gezeigt verwendeten Eindrehkopfes im axialen Längsschnitt entlang der in der Draufsicht rechts gezeigten Ebene, sowie jeweils eine Draufsicht von unten und von oben auf den Eindrehkopf und einer Schnittansicht in der in der Draufsicht rechts gezeigten Ebene B-B;
**Fig. 6** ein Ausführungsbeispiel eines im erfindungsgemäßen Insertionsset wie in Fig. 1 gezeigt verwendeten Halteschaftes in der Draufsicht, sowie jeweils eine Draufsicht von unten und von oben auf den Halteschaft;
**Fig. 7** ein Ausführungsbeispiel einer Verschlussschraube zum Verschluss der Eindrehbasis und der Halteschraube im axialen Längsschnitt entlang der in der Draufsicht rechts gezeigten Ebene, sowie eine Draufsicht von unten und von oben auf die Verschlussschraube;
**Fig. 8** ein Ausführungsbeispiel eines mit dem Grundkörper gemäß dem erfindungsgemäßen Insertionsset wie in Fig. 2 gezeigt verwendbaren Abutments im axialen Längsschnitt entlang der in der Draufsicht rechts gezeigten Ebene, sowie eine Draufsicht von oben auf das Abutment;
**Fig. 9A** ein Ausführungsbeispiel eines Grundkörpers, wie bei dem erfindungsgemäßen Insertionsset wie in Fig. 1 verwendet, mit einem in den Grundkörper eingesetzten und mit Halteschraube gesicherten Abutment in der Draufsicht sowie im axialen Längsschnitt entlang der Ebene A-A in der Draufsicht
Fig. 9B eine Querschnittsansicht des Ausführungsbeispiel aus Fig 9A auf Höhe der Grundkörper-Abutment-Verbindung in der in der Draufsicht rechts gezeigten Ebene B-B, sowie eine Detailansicht davon.

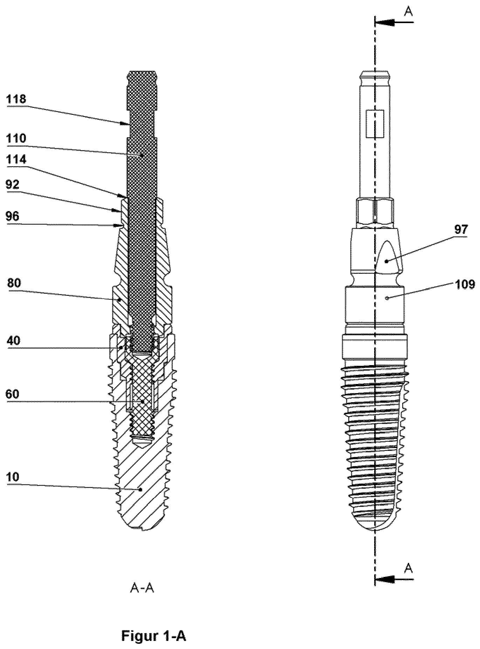

Wie in Figur 1A im Längsschnitt schematisch gezeigt, umfasst das erfindungsgemäße Insertionsset in einer Ausführung den Grundkörper 10, die Eindrehbasis 40 mit darin festgelegter Halteschraube 60, den auf der Eindrehbasis aufsitzenden Eindrehkopf 80 sowie den hier einteiligen Halteschaft 110, der den Eindrehkopf 80 durchdringt und in der Halteschraube 60 in der Eindrehbasis 40 festgelegt ist.

Bei der in Figur 1A gezeigten Ausführungsform des erfindungsgemäßen Insertionssets wird über den Halteschaft 110 und das nicht in der Zeichnung dargestellte Werkzeug, beispielweise eine Mehrkantnuss, die auf den Halteschaft 110 aufgesteckt ist und den Außenmehrkant 92 formschlüssig umgreift, das Drehmoment vom dentalen Winkelstück auf den Grundkörper übertragen. Dazu ist der Halteschaft 110 an seinem apikalen Ende mit einem Gewinde versehen, das in die Halteschraube 60 einschraubbar ist oder durch einen Bajonettverschluss dort festlegbar ist. Der Halteschaft 110 ist beispielhaft so ausgestaltet, dass mittels eines im Mittelabschnitt des Halteschaftes 110 vorgesehenen, gegebenenfalls konischen, Bundkragens 114, der am Endabschnitt des Eindrehkopfes 80 mit dem Außenmehrkant 92 koronal anliegt, der Eindrehkopf 80 gegen die Eindrehbasis 40 gehalten wird und mit der Eindrehbasis 40 apikal im Bereich der Stirnflache 90 eine Formschluss- und/oder Kraftschlussverbindung ausbildet. Die Eindrehbasis 40 selbst ist über die Halteschraube 60 im Grundkörper 10 festgelegt und durch die im Formschlussbereich des Grundkörper-Eindrehbasis-Paares angeordneten Eindrehelemente gegen ein umfangsmäßiges Verdrehen gesichert. Die Position eines Eindrehelement kann über die Indexmarkierung 109 angezeigt werden. Die einzelnen Bauteile des erfindungsgemäßen Insertionssets werden weiter unten im Detail beschrieben.

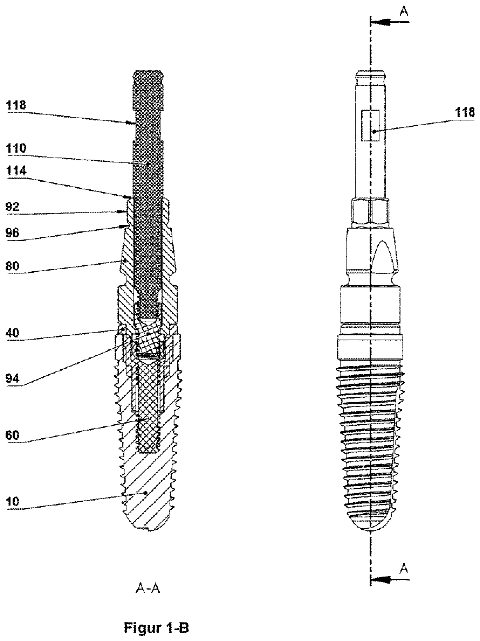

Das erfindungsgemäße Insertionsset erlaubt dem Implantologen, das aus der Verpackung entnommene und auf dem dentalen Winkelstück fixierte Insertionsset in die Bohrung im Kiefer des Patienten einzudrehen und je nach Bedingungen am Implantationsort die Vorbereitungen für die einphasige oder zweiphasige Einheilung in die Wege zu leiten. Dabei wird über das dentale Winkelstück ein Drehmoment über den Halteschaft 110 und den Mehrkant 92 auf den Grundkörper übertragen und ermöglicht ein einfaches Eindrehen des Grundkörpers in den Kiefer, ohne dass dazu weitere Montagen erforderlich sind. Nach Ende des Eindrehvorganges des Grundkörpers in den Kiefer kann der Halteschaft 110, falls erforderlich, aus dem Gewinde der Halteschaube 60 herausgedreht werden. Dazu kann am Halteschaft ein Ansatz 118 für ein Werkzeug wie ein Maulschlüssel vorgesehen sein. Der Eindrehkopf 80 kann über Klemm- oder Schraubelemente an der Eindrehbasis 40 oder über eine weitere Halteschraube 94 wie in Figur 1B gezeigt an der Halteschraube 60 fixiert sein und je nach Entscheidung des Implantologen zur einphasigen oder zweiphasigen Einheilung von der Eindrehbasis entfernt werden.

Wenn der Implantologe sich zu einer einphasigen Einheilung entschließt, kann der Eindrehkopf 80 auf der Eindrehbasis 40 verbleiben und kann selbst als Halterung für einen temporären Zahnersatz, als eine Art temporäres Abutment, oder als Scanbody dienen. Dabei kann für die Verwendung als provisorisches Abutment der am koronalen Ende des Eindrehkopfes angeordnete Mehrkant 92, beispielweise ein Sechskant, an der Ringnut 96 unterhalb des Mehrkantes 92 nach Entfernen des Halteschaftes 110 abgetrennt werden und der verbleibende untere Teil des Eindrehkopfes 80 zur Fixierung eines solchen temporären Zahnersatzes genutzt werden. Der Eindrehkopf 80 kann vorteilhaft mit der Eindrehbasis 40 eine Formschluss- und/oder Kraftschlussverbindung ausbilden. Dabei kann diese Formschlussverbindung auch so ausgestaltet sein, dass der Eindrehkopf 80 über die Formschlusselemente auf der Eindrehbasis 40 verklemmt wird oder über die weitere Halteschraube 94 festgelegt sein kann.

Wie ausgeführt, kann die Eindrehbasis 40 im Grundkörper über die Halteschraube 60 festgelegt sein. Dabei ist die Halteschraube mit einem apikalen Gewinde 62, einem Mittelabschnitt und einem Schraubenkopf 66 versehen. Im Schraubenkopf 66 kann eine Fixierung für den Halteschaft 110 oder für eine zweite Halteschraube 94 nach Art eines Innengewindes vorgesehen sein, in das der Halteschaft 110 über das in seinem apikalen Ende vorgesehene Gewinde 112 oder die zweite Halteschraube 94, wie in Fig 1B gezeigt, eingeschraubt werden kann. Die Halteschraube 94 erlaubt die Verwendung eines kürzeren Halteschaftes 110, falls die Kieferverhältnisse dies erfordern. Alternativ zu einer Gewindeverbindung zwischen der Halteschraube 60 und dem Halteschaft 110 kann auch eine - nicht dargestellte - Rastverbindung nach Art einer Bajonettverbindung vorgesehen sein, die bei Einführen des Halteschaftes 110 in den Schraubenkopf einrastet und den Halteschaft 110 über die Halteschraube 60 an der Eindrehbasis 40 fixiert. Es kann auch eine - nicht dargestellte - Formschlussverbindung zwischen Halteschaft 110 und Eindrehkopf 80 über eine Mehrkantverbindung realisiert sein, bei der die Bohrung im Eindrehkopf zumindest in einem Teilabschnitt nach Art eines Innenmehrkants ausgeführt ist, an den ein entsprechender Teilabschnitt des Halteschaftes 110 nach Art eines Außenmehrkantes angepasst ist. Der Außenmehrkantabschnitt des Halteschaftes, beispielsweise in Form eines Sechskants, kann sich nahezu bis zum apikalen Ende des Halteschaftes erstrecken, wobei am apikalen Ende des Halteschaftes eine Ringnut vorgesehen ist, in der ein O-Ring gelagert sein kann, der in einer entsprechenden Ringnut im Schraubenkopf 66 der Halteschraube 60 eingreift und so eine Art Rastverbindung ausbilden kann.

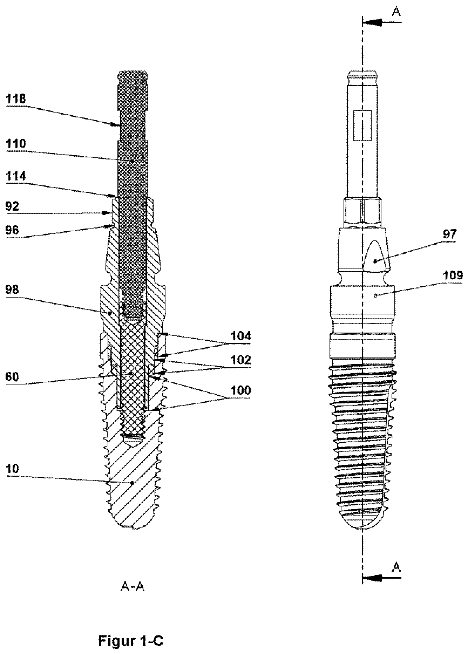

Figuren 1B und 1C zeigen weitere Ausführungsformen eines erfindungsgemäßen Insertionsets. Dabei zeigt Figur 1B, wie ebenfalls in Figur 1A im Längsschnitt schematisch gezeigt, das erfindungsgemäße Insertionsset in einer Ausführung mit Grundkörper 10, der Eindrehbasis 40 mit darin festgelegter Halteschraube 60, den auf der Eindrehbasis aufsitzenden Eindrehkopf 80 mit darin festgelegter zweiter Halteschraube 94 sowie den einteiligen Halteschaft 110, der den Eindrehkopf 80 durchdringt und in der Halteschraube 94 in der Eindrehbasis 40 festgelegt ist.

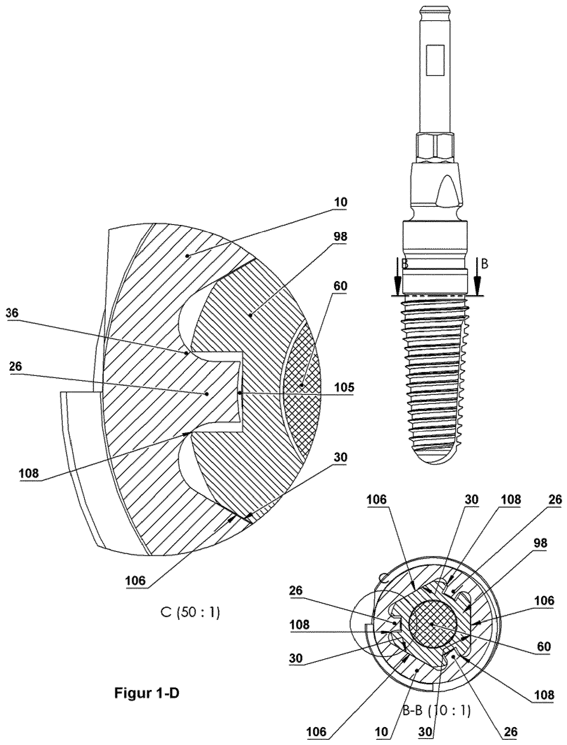

Figur 1C zeigt, ähnlich Figur 1A im Längsschnitt, schematisch eine weitere Ausführungsform des erfindungsgemäßen Insertionssets in einer Ausführung mit Grundkörper 10 und mit einem einteiligen Eindrehkörper 98 (aus Eindrehbasis 40 und Eindrehkopf 80) mit darin festgelegter Halteschraube 60, sowie den einteiligen Halteschaft 110, der den Eindrehkörper 98 durchdringt und in der Halteschraube 60 festgelegt ist. In einer nicht dargestellten Variante dieser Ausführungsform kann der Halteschaft 110 auch in einer zweiten Halteschraube 94 festgelegt sein. Wie anhand der Detailzeichnung zu Fig. 1C und deren vergrößerter Darstellung gemäß Fig. 1D gezeigt ist, sind die Eindrehelemente (30; 106) an Grundkörper 10 und Eindrehkörper 98 so ausgestaltet, daß die Drehmomentübertragung von dem Eindrehkörper 98 auf den Grundkörper 10 - und entsprechend auch bei der Drehmomentübertragung von der Eindrehbasis 40 auf den Grundkörper 10, bzw. von dem Eindrehkopf 80 auf die Eindrehbasis 40, wie weiter unten erläutert - ohne Kontakt zwischen den Federstegen (26, 55) und Nuten (50, 91) ermöglicht wird. Dazu sind die Federstege (26, 55) und Nuten (50, 91) jeweils mit einem ausreichenden Spiel zueinander ausgebildet, so daß bei der Drehbewegung kein Kontakt zwischen Steg (26, 55) und Nut (50, 91) gegeben ist und so die Stege (26, 55) und Nuten (50, 91) gegen eine mechanische Beschädigung geschützt sind. Dies kann dadurch weiter unterstützt werden, daß die Nutkanten der Nuten und die Stege und deren Seitenflächen so ausgestaltet sind, daß sich, insbesondere bei der Eindrehbewegung, die zur Längsachse des Grundkörpers koaxialen Nutkanten gegen die Stegseitenflächen 38 im Bereich der Stegwurzel 36 abstützen und ein Kontakt zwischen dem radialen Ende des Federstegs und der Nut vermieden und insbesondere einem Abscheren des Federsteges, nach Art eines Anschlagschutzes, vorgebeugt wird.

Grundsätzlich ist es bei Verwendung einer zweiten Halteschraube 94 von Vorteil, wenn der Kopf dieser Halteschraube 94 unterhalb der Ebene von Ringnut 96 endet, so daß ein Abtrennen des Mehrkantes 92 ohne Behinderung durch diese zweite Halteschraube 94 möglich ist.

Fig 1D zeigt eine Querschnittsansicht des Ausführungsbeispiel aus Fig 1C auf Höhe der Grundkörper-Eindrehkörper-Verbindung in der in der Draufsicht rechts gezeigten Ebene B-B, sowie eine vergrößerte Detailansicht davon. Die Eindrehelementpaare - in der bevorzugten Ausführungsform hier drei Eindrehelementpaare - sind hier in Form von Innenkantflächen 30 am Grundkörper 10 ausgebildet, die an den Außenkantflächen 106 am Eindrehkörper 98 zur Anlage kommen und die Übertragung des Drehmomentes vom Eindrehwerkzeug auf den Grundkörper 10 erlauben. Dabei ist zwischen je zwei Eindrehelementpaaren (30, 106) ein Formschlusselementpaar (26, 105) in Form einer Federsteg-Nut-Verbindung angeordnet, wobei die Nutkanten 108 an der Federstegwurzel 36 des Federsteges 26 am Grundkörper anliegen und zwischen den beidseitigen Anlagepunkten kein Kontakt zwischen Nut und Federsteg gegeben ist, um eine Beschädigung des Steges insbesondere beim Eindrehen des Grundkörpers zu verhindern. Diese Detaildarstellung gemäß Fig. 1D gilt prinzipiell auch für die Eindrehelementpaare zwischen Grundkörper und Eindrehbasis bzw. zwischen Eindrehbasis und Eindrehkopf, wobei bei letzterer auch Kontakt zwischen Stegflächen und Nutflächen zulässig ist.

Aus Gründen der Herstellung als auch der Wiederverwendbarkeit ist das Formschlusselementpaar bei allen Bauteilen mit Eindrehelementpaaren des erfindungsgemäßen Insertionssets in Form einer Federsteg-Nut-Verbindung (26, 50; 26,105; 55, 91) zwischen zwei benachbarten Eindrehelementpaaren (30, 48; 56, 88; 30, 106) bevorzugt so im Formschlussabschnitt angeordnet, daß beim Eindrehen oder Ausdrehen des Grundkörpers in den Kiefer kein Kontakt zwischen dem Federsteg und Nut erfolgt und nur die zur Längsachse des Grundkörpers koaxiale Nutkante (51; 89; 108) zumindest einer Nut (50; 91; 105) in Drehrichtung an der zur Längsachse des Grundkörpers (10) koaxialen Federstegwurzel (36; 57) des korrespondierenden Federsteges (26; 55) zur Anlage kommt.

Dabei ist das Formschlusselementpaar in Form einer Federsteg-Nut-Verbindung (26, 50; 26,105; 55, 91) zwischen zwei benachbarten Eindrehelementpaaren (30, 48; 56, 88; 30, 106) bevorzugt so angeordnet, daß die zur Längsachse des Grundkörpers koaxiale Nutkante (51; 89; 108) an der zur Längsachse des Grundkörpers (10) koaxialen Federstegwurzel (36; 57) des korrespondierenden Federsteges (26; 55) beidseits zur Anlage kommt, wobei zwischen den beiden Anlagepunkten Federsteg und Nut mit Spiel beabstandet sind.

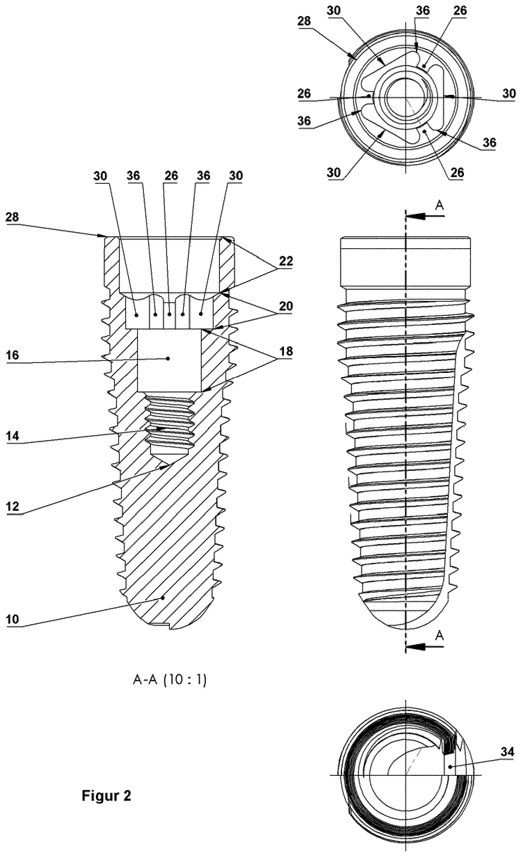

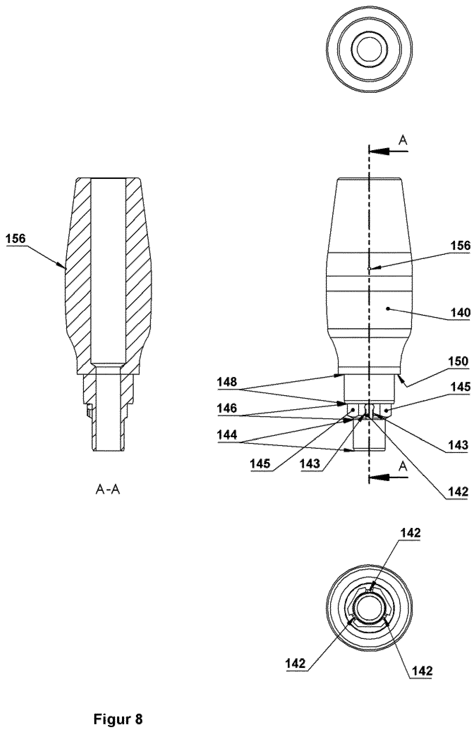

Wie in Fig. 2 gezeigt, ist der Grundkörper 10 an seinem in Fig. 1 unten gezeigten apikalen Ende geschlossen ausgebildet und weist eine zu seinem in Fig. 1 oben liegenden koronalen Ende hin offene Blindbohrung 12 mit einem Innengewinde 14 am apikalen Ende der Blindbohrung 12 auf. In das Innengewinde ist eine in Fig. 2 zeichnerisch nicht dargestellte Halteschraube 60 für die Eindrehbasis 40 oder ein Abutment 140 einschraubbar. An das Innengewinde 14 des Grundkörpers 10 schließt in koronaler Richtung eine hohlzylindrische Ringausnehmung 16 mit gegenüber dem Innengewinde 14 vergrößerten Innendurchmesser an. Die Ringausnehmung 16 weist in der dargestellten Form drei Bereiche 18; 20; 22 auf. So weist die Ringausnehmung 16 gemäß Figur 2 einen an das Innengewinde 14 koronal anschließenden Führungsabschnitt 18 auf. An den Führungsabschnitt 18 der Ringausnehmung 16 schließt sich in koronaler Richtung ein Formschlussabschnitt 20 an, der einen gegenüber dem Führungsabschnitt 18 vergrößerten Innendurchmesser hat und eine zumindest abschnittsweise konische Innenwandung mit - in der Ausführungsform gemäß Figur 2 - drei radial nach innen gerichteten Federstegen 26 aufweisen kann. Die Federstege 26 sind zu den Nuten 142 an dem in Figur 8 gezeigten Abutment 140 nach Art einer Nut-Feder-Verbindung korrespondierend ausgebildet und können vorzugsweise derart bemessen sein, dass sie sich über die gesamte axiale Länge des Formschlussabschnittes 20 erstrecken. Die Federstege 26 können durch maschinelle mechanische oder elektrochemische Bearbeitung aus dem Grundkörper ausgebildet sein.

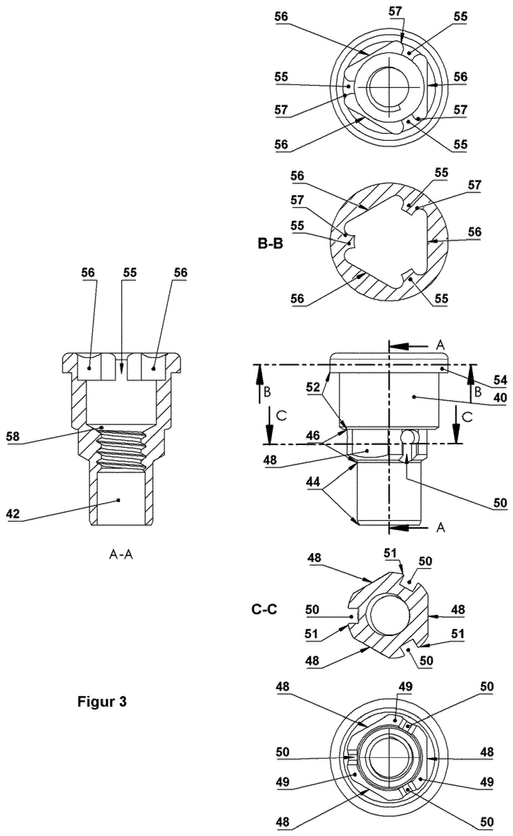

In dem Formschlussabschnitt 20 ist gemäß Fig. 2 bevorzugt zwischen je zwei Federstegen 26 je eine Innenkantfläche 30 als Eindrehelement vorgesehen, an dem jeweils eine korrespondierende, formkomplementäre Außenkantfläche 48 an der in Fig. 3 gezeigten Eindrehbasis 40 als Eindrehelement während des Eindrehvorganges des Grundkörpers 10 in den Kiefer anliegen kann. Zusätzlich kann ein als Außenmehrkantfläche gestaltetes Eindrehelement an der Eindrehbasis oder dem Eindrehkörper jeweils so ausgebildet sein, daß die Planfläche der Außenkantfläche, die auch radial vorspringend ausgebildet sein kann, zumindest in Eindrehrichtung mit einer Nutkante 51/108 die beim Eindrehen des Grundkörpers in den Kiefer an der korrespondierenden Stegseitenfläche 38/59 an der Stegwurzel 36/57, nicht jedoch an der Stegspitze zur Anlage kommen kann und so die Übertragung des Drehmomentes auf den Grundkörper unterstützt, ohne daß die Stegspitze beim Eindrehen beschädigt werden kann. Eine solche Wechselwirkung/Abstützung/Anschlag zwischen Federstegwurzel und Nutkante ist bei jedem bei dem erfindungsgemäßen Insertionsset verwendeten Eindrehelementpaar gegeben, um die Übertragung des Drehmomentes in Drehrichtung zu unterstützen, wenn zwischen zwei Eindrehelementpaaren radiale Federstege/Nuten angeordnet sind.

Aus mechanischen und geometrischen Gründen ist die Verwendung von drei Eindrehelementen wie beispielsweise Innenkantflächen am Grundkörper 10 vorteilhaft, es können jedoch auch zwei bis sechs Eindrehelemente wie Innenkantflächen vorgesehen sein, an denen korrespondierende Außenkantflächen 48 der Eindrehbasis als Eindrehelemente eingreifen, solange beim Einsetzen der Eindrehbasis 40 die Formschlusselemente an Grundkörper 10 und Eindrehbasis 40 zuverlässig in Eingriff gebracht werden können. Zwischen den Innenkantflächen können bei den Ausführungsformen gemäß der Erfindung jeweils Vorsprünge wie Federstege 26 in entsprechender Anzahl vorgesehen sein, wobei die Federstege und die Innenkantflächen sich aus Gründen einer verbesserten Kraftübertragung axial über die gesamte axiale Länge des Formschlussabschnittes erstrecken können und über die formkomplementäre Außenkantflächen der Eindrehbasis die Drehmomentübertragung ermöglichen.

Die in Fig. 3 gezeigte Eindrehbasis weist koronal einen Auflagebund 54, daran apikal anschließend einen Endabschnitt 52, der eine nicht dargestellte umlaufende Nut für die Aufnahme eines Dichtmittels wie eines nicht dargestellten O-Rings im Endabschnitt 52 aufweisen kann, einen Formschlussabschnitt 46 und einen Führungsabschnitt 44 auf. Im Formschlussabschnitt 46 sind eine Anzahl von Eindrehelementen jeweils in Form von Außenmehrkantflächen 48 und axial verlaufende Nuten 50 vorgesehen, die jeweils in ihrer Form, Anordnung und in ihrer Anzahl jeweils den Eindrehelementen und den Federstegen 26 im Formschlussabschnitt 20 des Grundkörpers 10 korrespondieren. Bei der im Grundkörper eingesetzten Eindrehbasis 40 sind die Nuten 50 zu den Federstegen 26 im Grundkörper 10 vorzugsweise mittig mit Spiel angeordnet und bevorzugt nicht in Kontakt, um eine Beschädigung der Federstege 26 zu vermeiden, während die Eindrehelemente 30 am Grundkörper 10 form- und/oder kraftschlüssig mit den Eindrehelementen 48 an der Eindrehbasis 40 in Eingriff sind, um eine Drehmomentübertragung zu ermöglichen.

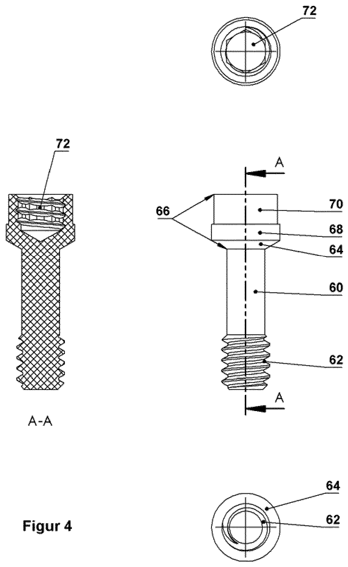

Beim Einsetzen der Eindrehbasis 40, die mit einer axialen Längsbohrung 42 versehen ist, deren Innendurchmesser etwa dem Außendurchmesser der in Fig. 2 nicht gezeigten Halteschraube [60 in Fig. 4] entspricht, in den Grundkörper 10 greift der Führungsabschnitt 44 in den Führungsabschnitt 18 der Ringausnehmung 16 ein, wobei die Zylindermantelfläche des Führungsabschnittes 44 an der Innenzylindermantelfläche des Führungsabschnittes 18 des Grundkörpers 10 zur Anlage kommt.

Der Endabschnitt 52 der Eindrehbasis 40 ist bei eingesetzter Eindrehbasis in dem Endabschnitt 22 des Grundkörpers 10 angeordnet. Die Federstege 26 sind in den Nuten 50 positioniert, während der Auflagebund 54 am Stirnrand 28 zur Anlage kommen kann. Damit ist die Eindrehbasis 40 dicht und über die Eindrehelementepaare [30; 48] formschlüssig zu dem Grundkörper 10 festgelegt.

Mittels der die Eindrehbasis 40 durchsetzenden in Fig. 4 gezeigten Halteschraube 60, die in das Innengewinde 14 des Grundkörpers 10 einschraubbar ist, lässt sich die Eindrehbasis drehfest mit dem Grundkörper 10 verbinden. Um das Entfernen der Eindrehbasis 40 aus dem Grundkörper 10 zu erleichtern, beispielsweise, wenn das Abutment 140 eingesetzt werden soll, kann in der die Eindrehbasis 40 durchsetzenden Bohrung 42 ein Innengewinde vorgesehen sein, in das nach Entfernen der Halteschraube ein nicht dargestellter Abdrückpfosten mit Außengewinde einschraubbar ist, der sich mit seinem apikalen Ende am Innengewinde 14 des Grundkörpers abstützt. Beim Einschrauben des Abdrückpfostens wird die Eindrehbasis 40 dann aus dem Grundkörper 10 koronal angehoben und kann entnommen werden.

Im koronalen Endabschnitt am Auflagebund 54 weist die Eindrehbasis 40 innenseitig Eindrehelement 56 auf, die als Innenmehrkantflächen 56 ausgestaltet sein können und mit Außenmehrkantflächen 88 im Formschlussabschnitt 86 am Eindrehkopf 80 eine Formschlussverbindung ausbilden können. So kann die Übertragung des Drehmomentes vom Winkelstück über den Halteschaft 110 und den Eindrehkopf 80 auf die Eindrehbasis 40 und den Grundkörper 10 erfolgen und das Eindrehen des Insertionssets in den Kiefer ermöglichen. Auch hier ist aus mechanischen und konstruktiven Gründen die Verwendung von drei Innenkantflächen 56 an der Eindrehbasis 40 vorteilhaft, es können jedoch auch zwei bis sechs Innenkantflächen vorgesehen sein, an denen korrespondierende formkomplementäre Außenkantflächen 88 des Eindrehkopfes 80 als Eindrehelemente eingreifen, solange die Eindrehelemente [56; 88] an der Eindrehbasis 40 und Eindrehkopf 80 zuverlässig in Eingriff gebracht werden können.

Wie in Figur 4 gezeigt, weist die Halteschraube 60 ein apikal angeordnetes Gewinde 62, einen Mittelabschnitt und einen Schraubenkopf 66, der einen apikalen unteren Abschnitt 68 mit Konusbund 64 und einen koronalen oberen Abschnitt 70 hat, auf. Der untere Abschnitt 68 hat gegenüber dem oberen Abschnitt 70 einen größeren radialen Durchmesser und presst beim Einschrauben der Halteschraube 60 mittels des Konusbundes 64 über den konischen Abschnitt 58 die Eindrehbasis 40 gegen den Grundkörper 10. Zwischen dem oberen Abschnitt 70 und der Eindrehbasis 40 kann radial so eine zylindrische Nut zwischen Schraubenkopf 66 und Eindrehbasis ausgebildet sein, in die ein rohrzylindrischer Abschnitt 84 des Eindrehkopfes 80 eingreifen und so eine Führung des Eindrehkopfes 80 in der Eindrehbasis 40 ermöglichen kann. Im rohrzylindrischen Abschnitt 84 des Eindrehkopfes können Rastelemente vorgesehen sein, die mit entsprechend korrespondierenden Rastelementen an der Eindrehbasis 40 und/oder am Schraubenkopf 66 der Halteschraube 60 eine Sicherung des Eindrehkopfes auf der Eindrehbasis 40 bereits ohne Halteschaft 110 oder zweiter Halteschraube ermöglichen. Im Schraubenkopf 66 ist ein Innensechskantabschnitt (Inbus) vorgesehen, der zusätzlich mit einem Innengewinde versehen ist. Mittels eines Inbusschlüssels kann die Halteschraube 60 aus dem Grundkörper 10 geschraubt werden, um die Entfernung der Eindrehbasis 40 zu ermöglichen und ein Abutment 140 in die Ringausnehmung 16 des Grundkörpers einsetzen zu können. In das Innengewinde im Innensechskantabschnitt des Schraubenkopfes 66 ist das Außengewinde 112 des Halteschaftes 110 oder einer zweiten Halteschraube einschraubbar, und so kann der Eindrehkopf 80 auf der Eindrehbasis 40 fixiert werden.

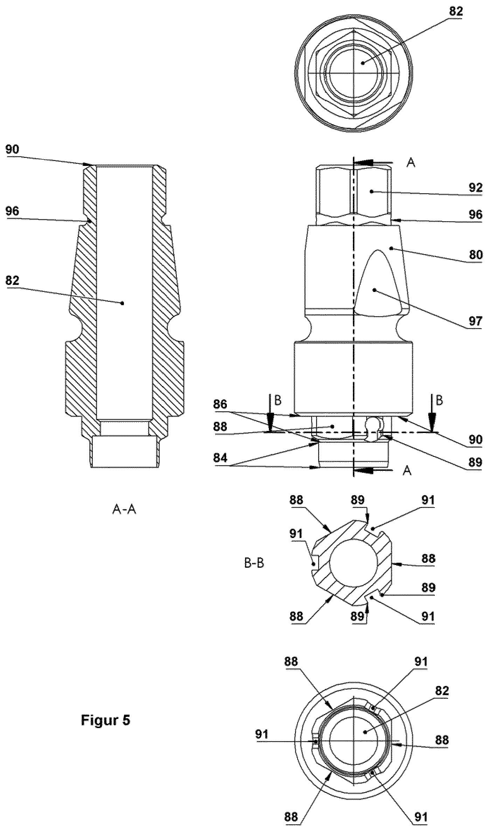

Gemäß Figur 5 weist der Eindrehkopf 80 am apikalen Ende die Stirnfläche 90 auf, die in der Einbauposition an der Stirnfläche am Auflagebund 54 der Eindrehbasis 40 aufliegt. In der Einbauposition greift der rohrzylindrische Abschnitt 84 zwischen den Schraubenkopf 66 und den koronalen Auflagebund 54 der Eindrehbasis 40 ein, und die als Außenmehrkantflächen 88 im Formschlussabschnitt 86 ausgebildeten Eindrehelemente bilden mit den als Innenmehrkantflächen 56 an der Eindrehbasis 40 ausgebildeten Eindrehelementen eine Formschluss/Kraftschlussverbindung aus. So kann die Übertragung des Drehmomentes vom Winkelstück über den Halteschaft 110 und über den Mehrkant 92, wie einen Sechskant, am Eindrehkopf 80 auf die Eindrehbasis 40 und so den Grundkörper 10 erfolgen. Dabei kann der Mehrkant 92 von einem am Eindrehwerkzeug vorgesehenen - nicht in den Figuren dargestellten - Innenmehrkant nach Art einer Steckschlüsselnuss umfasst sein und so die Kraftübertragung vom Werkzeug auf den Eindrehkopf 80 ermöglichen.

Bei der Kraftübertragung von Eindrehkopf 80 auf Eindrehbasis 40 ist aus mechanischen und geometrischen Gründen die Verwendung von drei Eindrehelementpaaren (56;88) vorteilhaft, es können jedoch auch zwei bis sechs Eindrehelementpaare vorgesehen sein, bei denen jeweils korrespondierende Außenkantflächen 88 des Eindrehkopfes 80 als Eindrehelemente an Innenmehrkantflächen 56 der Eindrehbasis eingreifen. Anstelle der Mehrkantverbindung können grundsätzlich auch andere Formschlussverbindungen, beispielsweise durch Ausbildung von Nocken/koaxialen Vorsprüngen an einem Bauteil und korrespondierenden Vertiefungen am anderen Bauteil, ausgebildet sein.

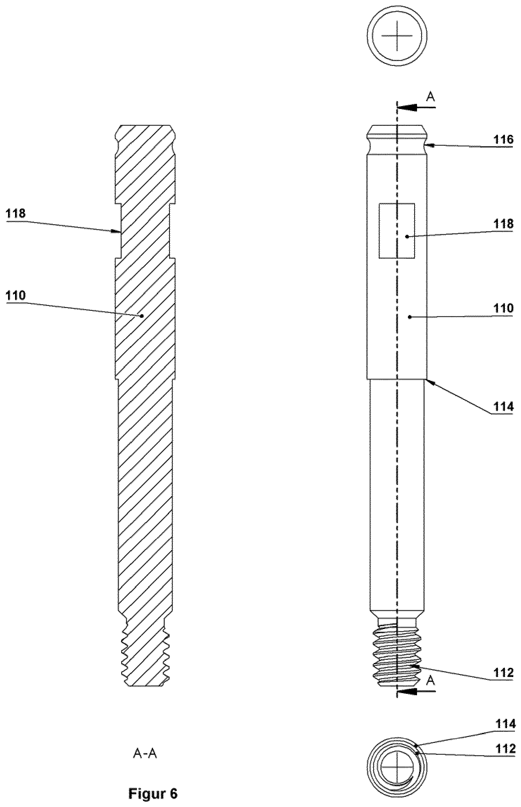

Fig. 6 zeigt in der Draufsicht den Halteschaft 110 mit apikalem Gewindeabschnitt 112, Bundkragen 114 im Mittelabschnitt des Halteschaftes 110 sowie Ansatz 116 für ein Winkelstück und Werkzeugansatz 118. Der Halteschaft 110 kann beispielhaft so ausgestaltet sein, dass mittels des im Mittelabschnitt des Halteschaftes 110 vorgesehenen Bundkragens 114, der am Endabschnitt des Eindrehkopfes 80 anliegt, der Eindrehkopf 80 gegen die Eindrehbasis 40 oder der einteilige Eindrehkörper 98 gegen den Grundkörper 10 kraft- und/oder formschlüssig gehalten wird und der Eindrehkopf 80 mit der Eindrehbasis 40 im Bereich der Stirnfläche 90 und des Auflagebundes 54 oder der einteilige Eindrehkörper 98 mit dem Grundkörper 10 eine Formschluss- und/oder Kraftschlussverbindung ausbildet.

Der Halteschaft 110 kann auch, wie in Fig. 1A gezeigt, in einer zweiteiligen Form ausgebildet sein, wobei der untere Abschnitt in Form einer zweiten Halteschraube 94 ausgebildet sein kann, die, in die Halteschraube 60 eingeschraubt den Eindrehkopf 80 mit dem Bundkragen 114 gegen die Eindrehbasis festlegt.

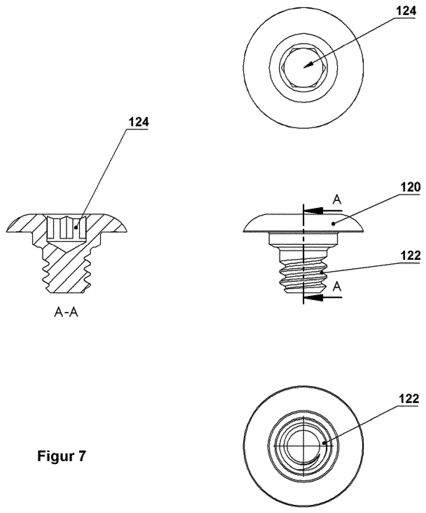

Fig. 7 zeigt eine Verschlussschraube 120 mit Gewinde 122 und Innensechskant 124 zum Ansatz einen Inbus-Schlüssels, mit dem die Verschlussschraube 120 in das Gewinde im Innensechskant 72 der Halteschraube 60 eingeschraubt werden kann. Mittels der Verschlussschraube kann die Eindrehbasis 40 verschlossen werden, wenn eine zweiphasige Einheilung seitens des Implantologen vorgesehen ist und das sich bildende Gewebe über den Grundkörper wächst.

So umfasst das erfindungsgemäße Insertionsset in einer Ausführung den Grundkörper 10, die Eindrehbasis 40 mit darin festgelegter Halteschraube 60, den auf der Eindrehbasis aufsitzenden Eindrehkopf 80 sowie den Halteschaft 110, der den Eindrehkopf 80 durchdringt und in der Halteschraube 60 in der Eindrehbasis 40 direkt oder über eine zweite Halteschraube festgelegt ist.

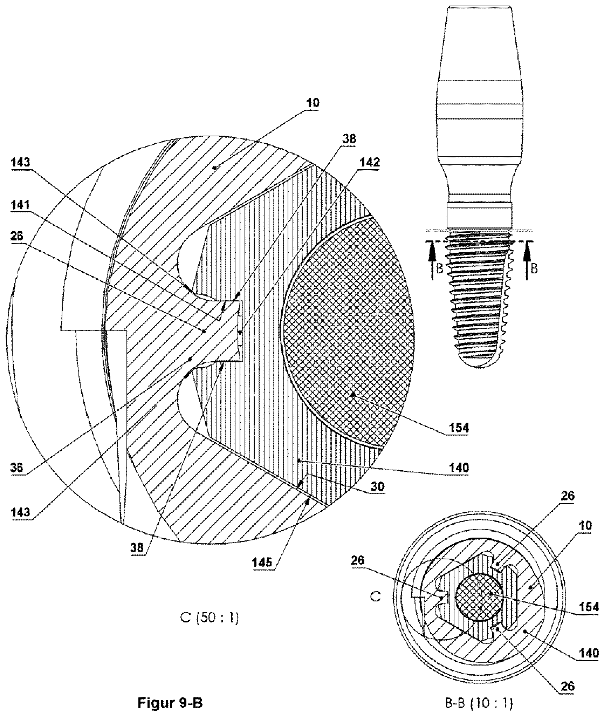

Das in Fig. 8 beispielhaft gezeigte Abutment 140 dient über den Befestigungskopf 152 zur Befestigung für einen nicht gezeigten festsitzenden Zahnersatz. Der Befestigungskopf 152 ist dabei auf die am Implantationsort im Kiefer gegebene individuelle räumliche Situation anpassbar und kann konisch, geneigt und/oder konvex geformt sein. In Gebrauchsposition unterhalb des an den Stirnrand 28 des Grundkörpers 10 aufsetzbaren Dichtkragen 150 weist das Abutment 140 in apikaler Richtung einen Endabschnitt 148, der eine nicht dargestellte umlaufende Nut für die Aufnahme eines Dichtmittels wie eines nicht dargestellten O-Rings im Endabschnitt 148 aufweisen kann, dazu apikal einen Formschlussabschnitt 146 und einen Führungsabschnitt 144 auf. Im Formschlussabschnitt 146 sind eine Anzahl von axial verlaufenden Nuten 142 vorgesehen, die in ihrer Form und Anordnung, aber nicht notwendigerweise in ihrer Anzahl, den Federstegen 26 im Formschlussabschnitt 20 des Grundkörpers 10 entsprechen. Im eingesetzten Zustand sind die Nuten 142 mit den Federstegen 26 in Eingriff, während die Eindrehelemente 30 am Grundkörper 10 auch ohne Kontakt zum Abutment 140 sein können, bevorzugt aber in Kontakt/Anlage sind. Bevorzugt stützt sich zumindest die Nutkante 143 in Eindrehrichtung an der Stegwurzel 36 des Federsteges 26 am Grundkörper 10 ab. So wird zuverlässig erreicht, daß die Federstege nicht durch die Drehbewegung abgeschert werden. Details der Grundkörper-Abutment-Verbindung sind der Fig. 9B gezeigt.

Beim Einsetzen des Abutments 140, das mit einer axialen Längsbohrung versehen ist, deren Innendurchmesser etwa dem Außendurchmesser der in Fig. 2 nicht gezeigten Halteschraube [60 in Fig. 4] entspricht, in den Grundkörper 10 greift der Führungsabschnitt 144 in den Führungsabschnitt 18 der Ringausnehmung 16 des Grundkörpers 10 ein, wobei die Zylindermantelfläche des Führungsabschnittes 144 an der Innenzylindermantelfläche des Führungsabschnittes 18 des Grundkörpers 10 zur Anlage kommt.

Der Endabschnitt 148 des Abutments 140 kann mit Paßsitz in dem Endabschnitt 22 des Grundkörpers 10 angeordnet sein. Die Federstege 26 greifen in die Nuten 142 ein, während der Dichtkragen 150 am Stirnrand 28 zur Anlage kommt. Damit ist das Abutment 140 dicht und formschlüssig verdrehgesichert zu dem Grundkörper 10 festgelegt.

Mittels einer das Abutment 140 durchsetzenden Halteschraube, die der Halteschraube 60 entsprechen kann und die in das Innengewinde 14 des Grundkörpers 10 einschraubbar ist, lässt sich das Abutment 140 drehfest mit dem Grundkörper 10 verbinden. Um das Entfernen des Abutments 140 aus dem Grundkörper 10 zu erleichtern, kann in der das Abutment durchsetzenden Bohrung ein in Fig. 8 nicht dargestelltes Innengewinde vorgesehen sein, in das nach Entfernen der Halteschraube ein nicht dargestellter Abdrückpfosten mit Außengewinde einschraubbar ist, der sich mit seinem apikalen Ende am Innengewinde 14 des Grundkörpers abstützt. Beim Einschrauben des Abdrückpfostens wird das Abutment 140 dann aus dem Grundkörper 10 koronal angehoben und kann entnommen werden.

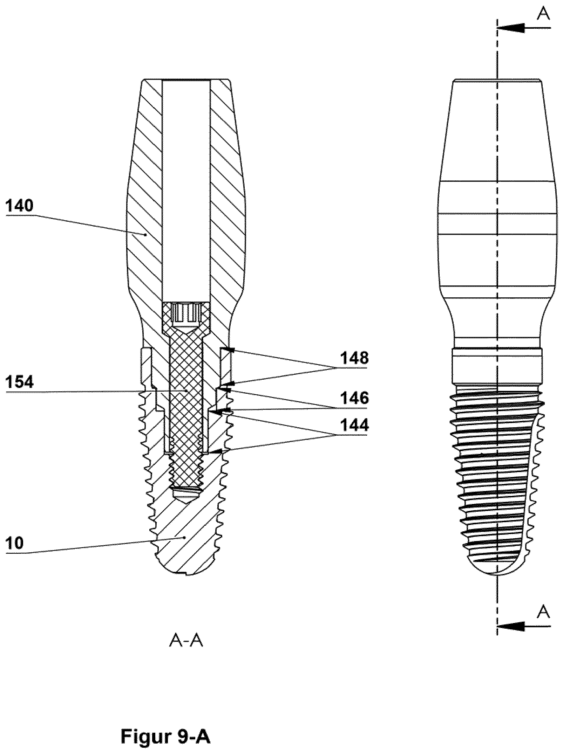

Das in Fig. 9A gezeigte Ausführungsbeispiel eines Grundkörpers 10, der bei dem erfindungsgemäßen Insertionsset wie in Fig. 1 gezeigt ist, mit einem in den Grundkörper eingesetzten und mit Halteschraube 154 gesicherten Abutment 140 in der Draufsicht sowie im axialen Längsschnitt in der Draufsicht entlang der Ebene A-A s wird in der vergrößerten Querschnittsansicht gemäß Fig. 9B in der in der Draufsicht rechts gezeigten Ebene B-B, sowie in der Detailansicht in Fg. 9B weiter erläutert.

Wie dort gezeigt, weist der Formschlussabschnitt (20) des Grundkörpers (10) und der Formschlussabschnitt (146) des Abutments (140) zwei bis sechs in der Form zueinander komplementäre Formschlusselementpaare (26; 142) in Form von radial nach innen gerichteten und zur Längsachse des Grundkörpers koaxialen Federstegen (26) am Grundkörper (10) und korrespondierenden Nuten (142) mit Nutflächen (141) und zwei Nutkanten (143) am Abutment (140) nach Art einer Nut-Feder-Verbindung auf, wobei der Formschlussabschnitt (20) des Grundkörpers (10) und der Formschlussabschnitt (146) des Abutments (140)) zwei bis sechs in der Form zueinander komplementäre Innenkant-Außenkant-Paare in Form von Innenkantflächen am Grundkörper (10) und korrespondierenden Außenkantflächen am Abutment (140) aufweisen, die jeweils umfangsmäßig vorzugsweise alternierend mit den Formschlusselementen in Grundkörper (10) und Abutment (140) ausgebildet sind. Dabei kommen die Innenkantflächen (30) am Grundkörper (10) und die korrespondierenden Außenkantflächen (145) am Abutment (140) beim Einsetzen des Abutments (140) in den Grundkörper (10) zumindest teilweise zur Anlage kommen.

Ferner kann dabei besonders jede zur Längsachse des Grundkörpers koaxiale Nutkante (143) der Nuten (142) an der zur Längsachse des Grundkörpers koaxialen Federstegwurzel (36) des korrespondierenden Federsteges (26) zur Anlage kommen.

Die Stegseitenflächen (38) jedes Federsteges (26) am Grundkörper (10) und die Nutflächen (141) der Nuten (142) am Abutment (140) kommen beim Einsetzen des Abutments (140) in den Grundkörper (10) zumindest teilweise zur Anlage.

### Bezuqszeichenliste

10 Grundkörper
12 Bohrung
14 Innengewinde
16 Ringausnehmung
18 Führungsabschnitt
20 Formschlussabschnitt
22 Endabschnitt
26 Steg 28
Stirnrand 30
Eindrehelement/Innenmehrkantfläche 32 Wandung
34 Spannut
36 Stegwurzel
38 Stegseitenfläche
40 Eindrehbasis
42 Bohrung mit Innengewindeabschnitt
44 Führungsabschnitt
46 Formschlussabschnitt
48 Eindrehelement/Außenmehrkantfläche
50 Nut
51 Nutkante
52 Endabschnitt
54 Auflagebund
55 Federsteg
56 Eindrehelement/Innenmehrkantfläche
57 Federstegwurzel
58 Konischer Abschnitt (Innen)
59 Federstegseitenfläche
60 Halteschraube
62 Außengewinde
64 Konusbund
66 Schraubenkopf
68 Unterer Abschnitt
70 Oberer Endabschnitt
72 Innensechskant mit Innengewinde
80 Eindrehkopf
82 Bohrung
84 Führungsabschnitt
86 Formschlussabschnitt
88 Eindrehelement/Außenmehrkantfläche
89 Nutkante
90 Stirnfläche
91 Nut
92 Außenmehrkant wie z.B. ein Sechskant
94 Zweite Halteschraube
96 Ringnut
97 Scanbodymarkierung
98 Eindrehkörper
100 apikaler Führungsabschnitt
102 Formschlussabschnitt
104 Koronaler Endabschnitt
105 Nut
106 Eindrehelement/Außenmehrkantfläche
107 Federstegwurzel
108 Nutkante
109 Indexmarkierung
110 Halteschaft
112 Außengewinde
114 Bundkragen
116 Winkelstückansatz
118 Werkzeugansatz
120 Verschlussschraube
122 Gewinde
124 Innensechskant
140 Abutment
141 Nutflächen
142 Nut
143 Nutkante
144 Führungsabschnitt
145 Außenmehrkantfläche
146 Formschlussabschnitt
148 Endabschnitt
150 Dichtkragen
152 Befestigungskopf
154 Halteschraube

## Patentansprüche

1. Insertionsset für ein enossales Einzelzahnimplantat für einen festsitzenden Zahnersatz, mit
- einem im Wesentlichen zylindrischen, in eine in einen Kieferknochen eingebrachte Bohrung einsetzbaren Grundkörper (10) mit einer Ringausnehmung (16) mit einem Formschlussabschnitt (20) und mit einer koaxial zur Ringausnehmung (16) angeordneten Bohrung (12), die apikal ein Gewinde (14) zur Festlegung einer Halteschraube aufweist;
- einer in die Ringausnehmung (16) des Grundkörpers (10) einsetzbaren Eindrehbasis (40) mit einem Formschlussabschnitt (46), wobei die Eindrehbasis (40) eine die Eindrehbasis (40) koaxial zur Ringausnehmung (16) durchdringende Bohrung (42) zur Aufnahme einer Halteschraube (60) aufweist;
- einer Halteschraube (60) mit einem apikalen Außengewinde (62) und einem koronalen Schraubenkopf (66), wobei die Halteschraube (60) in die Bohrung (42) der Eindrehbasis einsetzbar und in das Gewinde (14) des Grundkörpers (10) einschraubbar ist;
- einem Eindrehkopf (80), der mit der Eindrehbasis (40) in Eingriff bringbar ist und der eine koaxial zur Ringausnehmung (16) angeordnete Bohrung (82) und an seinem koronalen Ende einen Ansatz, vorzugsweise in Form eines Außenmehrkants (92), für ein Eindrehwerkzeug, aufweist, und
- einem Halteschaft (110), der in die Bohrung (82) des Eindrehkopfes (80) einsetzbar einenends an der Halteschraube (60) festlegbar ist und anderenends einen Ansatz für ein dentales Winkelstück aufweist,
wobei der Formschlussabschnitt (20) des Grundkörpers (10) und der Formschlussabschnitt (46) der Eindrehbasis (40) zueinander komplementäre Eindrehelemente (30; 48), die beim Einsetzen der Eindrehbasis (40) in den Grundkörper (10) miteinander in Eingriff gebracht werden, aufweisen und wobei die Eindrehbasis (40) und der Grundkörper (10) in Eingriffsposition der zueinander komplementären Eindrehelemente zueinander drehfest festgelegt sind,
wobei die zueinander komplementären Eindrehelemente an Grundkörper (10) und Eindrehbasis (40) als jeweils formkomplementäre Eindrehelementpaare, ausgewählt aus Paaren von Innenkant-Außenkant, Nocken-Einbuchtungen und Morsekegel-Morsekonus, ausgebildet sind,
wobei die Ringausnehmung (16) des Grundkörpers (10) einen apikalen Führungsabschnitt (18), einen koronal zu dem apikalen Führungsabschnitt (18) angeordneten Formschlussabschnitt (20) und einen koronal zu dem Formschlussabschnitt (20) angeordneten koronalen Endabschnitt (22) umfasst und wobei die Eindrehbasis (40) einen apikalen Führungsabschnitt (44), einen Formschlussabschnitt (46) und einen koronalen Endabschnitt (52), die mit den entsprechenden Abschnitten des Grundkörpers korrespondieren, umfasst.

2. Insertionsset für ein enossales Einzelzahnimplantat für einen festsitzenden Zahnersatz, mit
- einem im Wesentlichen zylindrischen, in eine in einen Kieferknochen eingebrachte Bohrung einsetzbaren Grundkörper (10) mit einer Ringausnehmung (16) mit einem Formschlussabschnitt (20) und mit einer koaxial zur Ringausnehmung (16) angeordneten Bohrung (12), die apikal ein Gewinde (14) zur Festlegung einer Halteschraube aufweist;
- einer in die Ringausnehmung (16) des Grundkörpers (10) einsetzbaren Eindrehbasis (40), die eine die Eindrehbasis (40) koaxial zur Ringausnehmung (16) durchdringende Bohrung (42) zur Aufnahme einer Halteschraube (60) aufweist;
- eine Halteschraube (60) mit einem apikalen Außengewinde (62) und einem koronalen Schraubenkopf (66), wobei die Halteschraube (60) in die Bohrung (42) der Eindrehbasis (40) einsetzbar und in das Gewinde (14) des Grundkörpers (10) einschraubbar ist;
- einem Eindrehkopf (80), der mit der Eindrehbasis (40) in Eingriff bringbar ist und der eine koaxial zur Ringausnehmung (16) angeordnete Bohrung (82) und an seinem koronalen Ende einen Ansatz, vorzugsweise in Form eines Außenmehrkants (92), für ein Eindrehwerkzeug aufweist, wobei die Eindrehbasis (40) und der Eindrehkopf (80) als einstückiger Eindrehkörper (98) ausgebildet sind, und
- einem Halteschaft (110), der in die Bohrung (82) des Eindrehkopfes (80) einsetzbar einenends an der Halteschraube (60) festlegbar ist und anderenends einen Ansatz für ein dentales Winkelstück aufweist,
wobei der Formschlussabschnitt (20) des Grundkörpers (10) und der Formschlussabschnitt (102) des Eindrehkörpers (98) zueinander komplementäre Eindrehelemente (30; 106), die beim Einsetzen des Eindrehkörpers (98) in den Grundkörper (10) miteinander in Eingriff gebracht werden, aufweisen und wobei die Eindrehbasis (40) und der Grundkörper (10) in Eingriffsposition der zueinander komplementären Eindrehelemente zueinander drehfest festgelegt sind,
wobei die zueinander komplementären Eindrehelemente an Grundkörper (10) und Eindrehkörper (98) als jeweils formkomplementäre Eindrehelementpaare, ausgewählt aus Paaren von Innenkant-Außenkant, Nocken-Einbuchtungen und Morsekegel-Morsekonus, ausgebildet sind, und
wobei die Ringausnehmung (16) des Grundkörpers (10) einen apikalen Führungsabschnitt (18), einen koronal zu dem apikalen Führungsabschnitt (18) angeordneten Formschlussabschnitt (20) und einen koronal zu dem Formschlussabschnitt (20) angeordneten koronalen Endabschnitt (22) umfasst und wobei der Eindrehkörper (98) einen apikalen Führungsabschnitt (100), einen Formschlussabschnitt (102) und einen koronalen Endabschnitt (104), die mit den entsprechenden Abschnitten des Grundkörpers korrespondieren, umfasst..

3. Insertionsset für ein enossales Einzelzahnimplantat für einen festsitzenden Zahnersatz nach Anspruch 1, wobei die Eindrehbasis (40) am koronalen Ende einen Formschlussabschnitt mit Eindrehelementen (56) aufweist, die mit Eindrehelementen (88) des Eindrehkopfes (80) miteinander in Eingriff gebracht werden können, und die Eindrehbasis (40) und der Eindrehkopf (80) in Eingriffsposition der zueinander komplementären Eindrehelemente drehfest festgelegt sind, wobei die zueinander komplementären Eindrehelemente an Eindrehbasis (40) und Eindrehkopf (80) als jeweils formkomplementäre Eindrehelementpaare, ausgewählt aus Paaren von Innenkant-Außenkant, Nocken-Einbuchtungen und Morsekegel-Morsekonus, ausgebildet sind.

4. Insertionsset für ein enossales Einzelzahnimplantat für einen festsitzenden Zahnersatz nach einem der Ansprüche 1 oder 3, wobei der Schraubenkopf (66) der Halteschraube (60) einen Innenmehrkant und bevorzugt ein im Innenmehrkant angeordnetes Innengewinde (72) aufweist.

5. Insertionsset für ein enossales Einzelzahnimplantat für einen festsitzenden Zahnersatz nach einem der Ansprüche 1, 3 oder 4, wobei der Schraubenkopf (66) der Halteschraube (60) in der Gebrauchsposition in der Eindrehbasis (40) versenkt ist.

6. Insertionsset für ein enossales Einzelzahnimplantat für einen festsitzenden Zahnersatz nach Anspruch 2, wobei die Halteschraube (60) und der Halteschaft (110) einstückig ausgebildet sind.

7. Insertionsset für ein enossales Einzelzahnimplantat für einen festsitzenden Zahnersatz nach einem der Ansprüche 2 oder 6, wobei der Halteschaft (110) zweistückig ausgebildet ist.

8. Insertionsset für ein enossales Einzelzahnimplantat für einen festsitzenden Zahnersatz nach einem der Ansprüche 2, 6 oder 7, wobei der Halteschaft (110) so ausgebildet ist, dass der Halteschaft (110) in Gebrauchsposition Grundkörper (10), Eindrehbasis (40) und Eindrehkopf (80) bzw. Grundkörper (10) und Eindrehkörper (98) in Eingriff hält.

9. Insertionsset für ein enossales Einzelzahnimplantat für einen festsitzenden Zahnersatz nach einem der Ansprüche 1 bis 8, wobei die zueinander komplementären Eindrehelemente (30; 48) an Grundkörper (10) und Eindrehbasis (40), die zueinander komplementären Eindrehelemente (56; 88) an Eindrehbasis (40) und Eindrehkopf (80), sowie die zueinander komplementären Eindrehelemente (30; 106) an Grundkörper (10) und Eindrehkörper (98) als jeweils zwei bis sechs formkomplementäre Eindrehelementpaare (30, 48; 56, 88; 30, 106), ausgewählt aus Paaren von Innenkant-Außenkant, Nocken-Einbuchtungen und Morsekegel-Morsekonus, ausgebildet sind, die in Umfangsrichtung vorzugsweise gleichmäßig beabstandet angeordnet sind.

10. Insertionsset für ein enossales Einzelzahnimplantat für einen festsitzenden Zahnersatz nach Anspruch 9, wobei mindestens zwischen zwei formkomplementären Eindrehelementpaaren (30, 48; 56, 88; 30, 106), die aus Paaren von Innenkant-Außenkant und Nocken-Einbuchtungen und Morsekegel-Morsekonus ausgewählt sind und die in Umfangsrichtung benachbart angeordnet sind, ein Formschlusselementpaar in Form einer Federsteg-Nut-Verbindung (26, 50; 26,105; 55, 91) angeordnet ist, wobei zumindest die zur Längsachse des Grundkörpers koaxiale Nutkante (51; 89; 108) zumindest einer Nut (50; 91; 105) zumindest in Eindrehrichtung an der zur Längsachse des Grundkörpers (10) koaxialen Federstegwurzel (36; 57) des korrespondierenden Federsteges (26; 55) zur Anlage kommt.

11. Insertionsset für ein enossales Einzelzahnimplantat für einen festsitzenden Zahnersatz nach Anspruch 10, wobei jeweils zwischen zwei benachbarten Eindrehelementpaaren (30, 48; 56, 88; 30, 106), ein Formschlusselementpaar in Form einer Federsteg-Nut-Verbindung (26, 50; 26,105; 55, 91) angeordnet ist

12. Insertionsset für ein enossales Einzelzahnimplantat für einen festsitzenden Zahnersatz nach Anspruch 10 oder 11, wobei das Formschlusselementpaar in Form einer Federsteg-Nut-Verbindung (26, 50; 26,105; 55, 91) zwischen zwei benachbarten Eindrehelementpaaren (30, 48; 56, 88; 30, 106) so angeordnet ist, daß beim Eindrehen oder Ausdrehen des Grundkörpers in den Kiefer kein Kontakt zwischen dem Federsteg und Nut erfolgt und nur die zur Längsachse des Grundkörpers koaxiale Nutkante (51; 89; 108) zumindest einer Nut (50; 91; 105) in Drehrichtung an der zur Längsachse des Grundkörpers (10) koaxialen Federstegwurzel (36; 57) des korrespondierenden Federsteges (26; 55) zur Anlage kommt.

13. Insertionsset für ein enossales Einzelzahnimplantat für einen festsitzenden Zahnersatz nach Anspruch 10 oder 11, wobei das Formschlusselementpaar in Form einer Federsteg-Nut-Verbindung (26, 50; 26,105; 55, 91) zwischen zwei benachbarten Eindrehelementpaaren (30, 48; 56, 88; 30, 106) so angeordnet ist, daß die zur Längsachse des Grundkörpers koaxiale Nutkante (51; 89; 108) an der zur Längsachse des Grundkörpers (10) koaxialen Federstegwurzel (36; 57) des korrespondierenden Federsteges (26; 55) beidseits zur Anlage kommt, wobei zwischen den beiden Anlagepunkten Federsteg und Nut mit Spiel beabstandet sind.

14. Insertionsset für ein enossales Einzelzahnimplantat für einen festsitzenden Zahnersatz nach einem der vorhergehenden Ansprüche, wobei außenseitig an zumindest einem von Grundkörper (10), Eindrehbasis (40), Eindrehkopf (80) oder Eindrehkörper (98) mindestens eine Indexmarkierung (109), die die Position zumindest eines Eindrehelementes und/oder die Position zumindest eines Formschlusselementpaares, anzeigt, vorhanden ist, und/oder außenseitig an Eindrehkopf oder Eindrehkörper mindestens eine Scanbodymarkierung (97) vorhanden ist.

## Claims

1. An insertion kit for an endosseous single-tooth implant for a fixed tooth replacement, with
a substantially cylindrical main body (10), which can be inserted into a bore introduced into a jaw bone, with an annular recess (16) with a positive-locking section (20) and with a bore (12) arranged coaxially relative to the annular recess (16), and which comprises apically a threading (14) for the securing of a retaining screw;
a screw-in base (40), which can be inserted into the annular recess (16) of the main body (10), with a positive-locking section (46), wherein the screw-in base (40) comprises a bore (42), which penetrates through the screw-in base (40) coaxially relative to the annular recess (16), for receiving a retaining screw (60);
a retaining screw (60) with an apical outer threading (62) and a coronal screw head (66), wherein the retaining screw (60) can be inserted in the bore (42) of the screw-in base and screwed into the threading (14) of the main body (10);
a screw-in head (80), which can be engaged with the screw-in base (40), and which comprises a bore (82) arranged coaxially relative to the annular recess (16) and a projection at the coronal end thereof, preferably in the form of an outer polygon (92), for a screw-in tool, and
a retaining shaft (110), which can be inserted in the bore (82) of the screw-in head (80) and which, at one end, can be fixed to the retaining screw (60) and, at the other end, comprises a projection for a dental angle piece,
wherein the positive-locking section (20) of the main body (10) and the positive-locking section (46) of the screw-in base (40) comprise mutually complementary screw-in elements (30; 48) which, during the insertion of the screw-in base (40) in the main body (10), are made to engage with one another, and wherein the screw-in base (40) and the main body (10), in the engagement position of the mutually complementary screw-in elements, are secured in a rotationally fixed manner with respect to one another,
wherein the mutually complementary screw-in elements on main body (10) and screw-in base (40) are designed as respective shape-complementary screw-in element pairs selected from inner edge-outer edge, pins-recesses and Morse taper-Morse cone pairs,
wherein the annular recess (16) of the main body (10) includes an apical guide section (18), the positive-locking section (20) arranged coronally relative to the apical guide section (18), and a coronal end section (22) arranged coronally relative to the positive-locking section (20), and wherein the screw-in base (40)/the screw-in body (98) includes an apical guide section (44/100), a positive-locking section (46/102) and a coronal end section (52/104), which correspond to the corresponding sections of the main body.

2. An insertion kit for an endosseous single-tooth dental implant for a fixed tooth replacement, having
a substantially cylindrical main body (10), which can be inserted into a bore introduced into a jaw bone, with an annular recess (16) with a positive-locking section (20) and with a bore (12) arranged coaxially relative to the annular recess (16), and which comprises apically a threading (14) for the securing of a retaining screw;
a screw-in base (40), which can be inserted into the annular recess (16) of the main body (10), which comprises a bore (42), which penetrates through the screw-in base (40) coaxially relative to the annular recess (16), for receiving a retaining screw (60);
a retaining screw (60) with an apical outer threading (62) and a coronal screw head (66), wherein the retaining screw (60) can be inserted in the bore (42) of the screw-in base (40) and screwed into the threading (14) of the main body (10);
a screw-in head (80), which can be engaged with the screw-in base (40), and which comprises a bore (82) arranged coaxially relative to the annular recess (16) and a placement at the coronal end thereof, preferably in the form of an outer polygon (92), for a screw-in tool, wherein the screw-in base (40) and the screw-in head (80) are designed as a single-piece screw-in body (98), and
-a retaining shaft (100), which can be inserted in the bore (82) of the screw-in head (80) and which, at one end, can be fixed to the retaining screw (60) and, at the other end, comprises a placement for a dental angle piece,
wherein the positive-locking section (20) of the main body (10) and the positive-locking section (102) of the screw-in body (98) comprise mutually complementary screw-in elements (30; 106), which, during the insertion of the screw-in body (98) in the main body (10), are made to engage with one another, and wherein the screw-in base (40) and the main body (10), in the engagement position of the mutually complementary screw-in elements, are secured in a rotationally fixed manner with respect to one another,
wherein the mutually complementary screw-in elements on main body (10) and screw-in body (98) are designed as respective shape-complementary screw-in element pairs selected from inner edge-outer edge, pins-recesses and Morse taper-Morse cone pairs,
wherein the annular recess (16) of the main body (10) includes an apical guide section (18), the positive-locking section (20) arranged coronally relative to the apical guide section (18), and a coronal end section (22) arranged coronally relative to the positive-locking section (20), and wherein the screw-in base (40)/the screw-in body (98) includes an apical guide section (44/100), a positive-locking section (46/102) and a coronal end section (52/104), which correspond to the corresponding sections of the main body.

3. An insertion kit for an endosseous single-tooth dental implant for a fixed tooth replacement according to Claim 1, wherein, on the coronal end, the screw-in base (40) comprises a positive-locking section with screw-in elements (56), which can be made to engage together with screw-in elements (88) of the screw-in head (80), and the screw-in base (40) and the screw-in head (80) are secured in a rotationally fixed manner in engagement position of the mutually complementary screw-in elements, wherein the mutually complementary screw-in elements on screw-in base (40) and screw-in head (80) are designed as respective shape-complementary screw-in element pairs selected from inner edge-outer edge, pins-recesses and Morse taper-Morse cone pairs.

4. An insertion kit for an endosseous single-tooth dental implant for a fixed tooth replacement according to any one of Claims 1 or 3, wherein the screw head (66) of the retaining screw (60) comprises an inner polygon and preferably an inner threading (72) arranged in the inner polygon.

5. An insertion kit for an endosseous single-tooth dental implant for a fixed tooth replacement according to any one of Claims 1, 3 or 4, wherein the screw head (66) of the retaining screw (60) in the use position is sunk in the screw-in base (40).

6. An insertion kit for an endosseous single-tooth dental implant for a fixed tooth replacement according to Claim 2, wherein the retaining screw (60) and the retaining shaft (110) are formed as a single piece.

7. An insertion kit for an endosseous single-tooth dental implant for a fixed tooth replacement according to any one of Claims 2 or 6, wherein the retaining shaft (110) is formed as two pieces.

8. An insertion kit for an endosseous single-tooth dental implant for a fixed tooth replacement according to any one of Claims 2, 6 or 7, wherein the retaining shaft (110) is designed so that, in the use position, the retaining shaft (110) retains main body (10), screw-in base (40) and screw-in head (80) or main body (10) and screw-in body (98) in engagement.

9. An insertion kit for an endosseous single-tooth dental implant for a fixed tooth replacement according to any one of Claims 1 to 8, wherein the mutually complementary screw-in elements (30; 48) on main body (10) and screw-in base (40), the mutually complementary screw-in elements (56; 88) on screw-in base (40) and screw-in head (80), and the mutually complementary screw-in elements (30; 106) on main body (10) and screw-in body (98) are formed as respective two to six shape-complementary screw-in element pairs (30, 48; 56, 88; 30, 106) selected from inner edge-outer edge, pins-recesses and Morse taper-Morse cone pairs, which are arranged preferably evenly spaced in circumferential direction.

10. An insertion kit for an endosseous single-tooth dental implant for a fixed tooth replacement according to Claim 9, wherein, at least between two shape-complementary screw-in element pairs (30, 48; 56, 88; 30, 106), which are selected from inner edge-outer edge and pins-recesses and Morse taper-Morse cone pairs, and which arranged adjacently in circumferential direction, a positive-locking element pair in the form of a spring web-slot connection (26, 50; 26, 105; 55, 91) is arranged, wherein at least the slot edge (51; 89; 108), which is coaxial relative to the longitudinal axis of the main body, of at least one slot (50; 91; 105), at least in screw-in direction, comes in contact with the coaxial spring web root (36; 57), which is coaxial relative to the longitudinal axis of the main body (10), of the corresponding spring web (26; 55).

11. An insertion kit for an endosseous single-tooth dental implant for a fixed tooth replacement according to Claim 10, wherein, in each case between two adjacent screw-in element pairs (30, 48; 56, 88; 30, 106), a positive locking element pair in the form of a spring web-slot connection (26, 50; 26, 105; 55, 91) is arranged.

12. An insertion kit for an endosseous single-tooth dental implant for a fixed tooth replacement according to Claim 10 or 11, wherein the positive-locking element pair in the form of a spring web-slot connection (26, 50; 26, 105; 55, 91) is arranged between two adjacent screw-in element pairs (30, 48; 56, 88; 30, 106), in such a manner that, when the main body is screwed into or unscrewed from the jaw, no contact occurs between the spring web and slot, and only the slot edge (51; 89; 108), which is coaxial relative to the longitudinal axis of the main body, of at least one slot (50; 91; 105), in the rotation direction, comes in contact with the spring web root (36; 57), which is coaxial with respect to the longitudinal axis of the main body (10), of the corresponding spring web (26;55).

13. An insertion kit for an endosseous single-tooth dental implant for a fixed tooth replacement according to Claim 10 or 11, wherein the positive-locking element pair in the form of a spring web-slot connection (26, 50; 26, 105; 55, 91) is arranged between two adjacent screw-in element pairs (30, 48; 56, 88; 30, 106), in such a manner that the slot edge (51; 89; 108), which is coaxial with respect to the longitudinal axis of the main body, comes in contact on both sides with the spring web root (36; 57), which is coaxial relative to the longitudinal axis of the main body (10), of the corresponding spring web (26; 55), wherein, between the two contact points, spring web and slot are spaced apart with play.

14. An insertion kit for an endosseous single-tooth implant for a fixed tooth replacement according to any one of the preceding claims, wherein, on the outside, on at least one of main body (10), screw-in base (40), screw-in head (80) or screw-in body (98), at least one index marking (109), which indicates the position of at least one screw-in element and/or the position of at least one positive-locking element pair, is present, and/or on the outside, on screw-in head or screw-in body, at least one scanbody marking (97) is present.

## Revendications

1. Kit d'insertion pour un implant dentaire endo-osseux unitaire pour une prothèse dentaire fixe, comprenant
- un corps de base (10) sensiblement cylindrique, insérable dans un perçage ménagé dans un os maxillaire, pourvu d'un évidement annulaire (16) doté d'un segment de complémentarité de forme (20) et pourvu d'un perçage (12) placé de manière coaxiale par rapport à l'évidement annulaire (16), qui apicalement comporte un filetage (14), pour l'immobilisation d'une vis de retenue ;
- une base à visser (40) insérable dans l'évidement annulaire (16) du corps de base, (10), dotée d'un segment de complémentarité de forme (46), la base à visser (40) comportant un perçage (42) traversant la base à visser (40), de manière coaxiale par rapport à l'évidement annulaire (16), destiné à recevoir une vis de retenue (60) ;
- une vis de retenue (60), dotée d'un filetage extérieur (62) apical et d'une tête de vis (66) coronaire, la vis de retenue (60) étant insérable dans le perçage (42) de la base à visser et susceptible d'être vissée dans le filetage (14) du corps de base (10) ;
- une tête à visser (80), qui est susceptible d'être amenée en engagement avec la base à visser (40) et qui comporte un perçage (82) placé de manière coaxiale par rapport à l'évidement annulaire (16) et sur son extrémité coronaire un embout, de préférence sous la forme d'un polygone extérieur (92), pour un outil de vissage, et
- une tige de retenue (110), qui en étant insérable dans le perçage (82) de la tête à visser (80) est susceptible d'être immobilisée par une extrémité sur la vis de retenue (60) et comporte sur l'autre extrémité un embout pour une pièce coudée dentaire,
le segment de complémentarité de forme (20) du corps de base (10) et le segment de complémentarité de forme (46) de la base à visser (40) comportant des éléments à visser (30 ; 48) complémentaires l'un de l'autre, qui lors de l'insertion de la base à visser (40) dans le corps de base (10) sont amenés en engagement mutuel, et dans la position d'engagement des éléments à visser complémentaires l'un de l'autre, la base à visser (40) et le corps de base (10) étant immobilisés de manière solidaire en rotation l'un par rapport à l'autre,
les éléments à visser complémentaires l'un de l'autre étant conçus sur le corps de base (10) et la base à visser (40) sous la forme de paires d'éléments à visser de forme respectivement complémentaire, sélectionnées parmi les paires bord intérieur-bord extérieur, cames-échancrures et cône morse-cône morse, l'évidement annulaire (16) du corps de base (10) comprenant un segment de guidage (18) apical, un segment de complémentarité de forme (20) placé du côté coronaire par rapport au segment de guidage (18) apical et un segment d'extrémité (22) coronaire, placé du côté coronaire par rapport au segment de complémentarité de forme (20), la base à visser (40) comprenant un segment de guidage (44) apical, un segment de complémentarité de forme (46) et un segment d'extrémité (52) coronaire, qui correspondent avec les segments adéquats du corps de base.

2. Kit d'insertion pour un implant dentaire endo-osseux unitaire pour une prothèse dentaire fixe, comprenant
- un corps de base (10) sensiblement cylindrique, insérable dans un perçage ménagé dans un os maxillaire, pourvu d'un évidement annulaire (16) doté d'un segment de complémentarité de forme (20) et pourvu d'un perçage (12) placé de manière coaxiale par rapport à l'évidement annulaire (16), qui apicalement comporte un filetage (14), pour l'immobilisation d'une vis de retenue ;
- une base à visser (40) insérable dans l'évidement annulaire (16) du corps de base, (10), qui comporte un perçage (42) traversant la base à visser (40), de manière coaxiale par rapport à l'évidement annulaire (16), destiné à recevoir une vis de retenue (60) ;
- une vis de retenue (60), dotée d'un filetage extérieur (62) apical et d'une tête de vis (66) coronaire, la vis de retenue (60) étant insérable dans le perçage (42) de la base à visser (40) et susceptible d'être vissée dans le filetage (14) du corps de base (10) ;
- une tête à visser (80), qui est susceptible d'être amenée en engagement avec la base à visser (40) et qui comporte un perçage (82) placé de manière coaxiale par rapport à l'évidement annulaire (16) et sur son extrémité coronaire un embout, de préférence sous la forme d'un polygone extérieur (92), pour un outil de vissage, la base à visser (40) et la tête à visser (80) étant conçues sous la forme d'un corps à visser (98) en monobloc,
- une tige de retenue (110), qui en étant insérable dans le perçage (82) de la tête à visser (80) est susceptible d'être immobilisée par une extrémité sur la vis de retenue (60) et comporte sur l'autre extrémité un embout pour une pièce coudée dentaire,
Le segment de complémentarité de forme (20) du corps de base (10) et le segment de complémentarité de forme (102) du corps à visser (98) comportant des éléments à visser (30 ; 106) complémentaires l'un de l'autre, qui lors de l'insertion du corps à visser (98) dans le corps de base (10) sont amenés en engagement réciproque et en position d'engagement des éléments à visser complémentaires l'un de l'autre, la base à visser (40) et le corps de base (10) étant immobilisés de manière solidaire en rotation l'un par rapport à l'autre,
les éléments à visser complémentaires l'un de l'autre étant conçus sur le corps de base (10) et le corps à visser (98) sous la forme de paires d'éléments à visser de forme respectivement complémentaire, sélectionnées parmi les paires bord intérieur-bord extérieur, cames-échancrures et cône morse-cône morse, et
l'évidement annulaire (16) du corps de base (10) comprenant un segment de guidage (18) apical, un segment de complémentarité de forme (20) placé du côté coronaire par rapport au segment de guidage (18) apical et un segment d'extrémité (22) coronaire, placé du côté coronaire par rapport au segment de complémentarité de forme (20) et le corps à visser (98) comprenant un segment de guidage (100) apical, un segment de complémentarité de forme (102) et un segment d'extrémité (104) coronaire, qui correspondent avec les segments adéquats du corps de base.

3. Kit d'insertion pour un implant dentaire endo-osseux unitaire pour une prothèse dentaire fixe selon la revendication 1, la base à visser (40) comportant sur l'extrémité coronaire un segment de complémentarité de forme pourvu d'éléments à visser (56), susceptibles d'être amenés en engagement réciproque avec des éléments à visser (88) de la tête à visser (80), et en position d'engagement des éléments à visser complémentaires l'une de l'autre, la base à visser (40) et la tête à visser (80) étant immobilisées de manière solidaire en rotation, les éléments à visser complémentaires l'un de l'autre sur la base à visser (40) et la tête à visser (80) étant conçus sous la forme de paires d'éléments à visser de forme respectivement complémentaire, sélectionnées parmi les paires bord intérieur-bord extérieur, cames-échancrures et cône morse-cône morse.

4. Kit d'insertion pour un implant dentaire endo-osseux unitaire pour une prothèse dentaire fixe selon l'une quelconque des revendications 1 ou 3, la tête de vis (66) de la vis de retenue (60) comportant un polygone intérieur et de préférence un taraudage (72) placé dans le polygone intérieur.

5. Kit d'insertion pour un implant dentaire endo-osseux unitaire pour une prothèse dentaire fixe selon l'une quelconque des revendications 1, 3 ou 4, dans la position d'utilisation, la tête de vis (66) de la vis de retenue (60) étant noyée dans la base à visser (40) .

6. Kit d'insertion pour un implant dentaire endo-osseux unitaire pour une prothèse dentaire fixe selon la revendication 2, la vis de retenue (60) et la tige de retenue (110) étant conçues en monobloc.

7. Kit d'insertion pour un implant dentaire endo-osseux unitaire pour une prothèse dentaire fixe selon l'une quelconque des revendications 2 ou 6, la tige de retenue (110) étant conçue en deux parties.

8. Kit d'insertion pour un implant dentaire endo-osseux unitaire pour une prothèse dentaire fixe selon l'une quelconque des revendications 2, 6 ou 7, la tige de retenue (110) étant conçue de telle sorte que dans la position d'utilisation, la tige de retenue (110) maintienne en engagement le corps de base (10), la base à visser (40) et la tête à visser (80) ou le corps de base (10) et le corps à visser (98).

9. Kit d'insertion pour un implant dentaire endo-osseux unitaire pour une prothèse dentaire fixe selon l'une quelconque des revendications 1 à 8, les éléments à visser (30 ; 48) complémentaires l'un de l'autre sur le corps de base (10) et la base à visser (40), les éléments à visser (56 ; 88) complémentaires l'un de l'autre sur la base à visser (40) et la tête à visser (80), ainsi que les éléments à visser (30 ; 106) complémentaires l'un de l'autre sur le corps de base (10) et le corps à visser (98) étant conçus sous la forme de respectivement de deux à six paires d'éléments à visser (30, 48 ; 56, 88 ; 30, 106) de forme complémentaire, sélectionnées parmi les paires bord intérieur-bord extérieur, cames-échancrures et cône morse-cône morse, qui en direction périphérique sont placés de préférence avec un écart régulier.

10. Kit d'insertion pour un implant dentaire endo-osseux unitaire pour une prothèse dentaire fixe selon la revendication 9, entre au moins deux paires d'éléments à visser (30, 48 ; 56, 88 ; 30, 106) de forme complémentaire, qui sont sélectionnées parmi les paires bord intérieur-bord extérieur, cames-échancrures et cône morse-cône morse et qui sont placées au voisinage les unes des autres dans la direction périphérique étant placée une paire d'éléments à complémentarité de forme sous la forme d'une liaison par barrette à ressort-rainure (26, 50 ; 26, 105 ; 55, 91), au moins dans la direction de vissage, au moins le bord de la rainure (51 ; 89 ; 108) coaxial par rapport à l'axe longitudinal du corps de base d'au moins une rainure (50 ; 91 ; 105) venant s'appliquer sur la racine de la barrette à ressort (36 ; 57) coaxiale à l'axe longitudinal du corps de base (10) de la barrette à ressort (26 ; 55) correspondante.

11. Kit d'insertion pour un implant dentaire endo-osseux unitaire pour une prothèse dentaire fixe selon la revendication 10, respectivement entre deux paires éléments à visser (30, 48 ; 56, 88 ; 30, 106) voisines, étant placée une paire d'éléments à complémentarité de forme sous la forme d'une liaison par barrette à ressort-rainure (26, 50 ; 26, 105 ; 55, 91) .

12. Kit d'insertion pour un implant dentaire endo-osseux unitaire pour une prothèse dentaire fixe selon la revendication 10 ou 11, la paire d'éléments à complémentarité de forme sous la forme d'une liaison par barrette à ressort-rainure (26, 50 ; 26, 105 ; 55, 91) étant placée entre deux paires d'éléments à visser (30, 48 ; 56, 88 ; 30, 106) voisines, de telle sorte que lors du vissage ou du dévissage du corps de base dans la mâchoire, aucun contact n'ait lieu entre la barrette à ressort et la rainure et que dans la direction de rotation, seul le bord de la rainure (51 ; 89 ; 108) coaxial par rapport à l'axe longitudinal du corps de base d'au moins une rainure (50 ; 91 ; 105) vienne s'appuyer sur la racine de la barrette à ressort (36 ; 57) coaxiale à l'axe longitudinal du corps de base (10) de la barrette à ressort (26 ; 55) correspondante.

13. Kit d'insertion pour un implant dentaire endo-osseux unitaire pour une prothèse dentaire fixe selon la revendication 10 ou 11, la paire d'éléments à complémentarité de forme sous la forme d'une liaison par barrette à ressort-rainure (26, 50 ; 26, 105 ; 55, 91) étant placée entre deux paires d'éléments à visser (30, 48 ; 56, 88 ; 30, 106) voisines de telle sorte, que le bord de la rainure (51 ; 89 ; 108) coaxial à l'axe longitudinal du corps de base vienne s'appuyer de part et d'autre sur la racine de la barrette à ressort (36 ; 57) coaxiale à l'axe longitudinal du corps de base (10) de la barrette à ressort (26 ; 55) correspondante, la barrette à ressort et la rainure étant écartées avec un jeu entre les deux points d'appui.

14. Kit d'insertion pour un implant dentaire endo-osseux unitaire pour une prothèse dentaire fixe selon l'une quelconque des revendications précédentes, sur la face extérieure d'au moins l'un parmi le corps de base (10), la base à visser (40), la tête à visser (80) ou le corps à visser (98) étant présent au moins un repère prédéfini (109), qui indique la position d'au moins l'un des éléments à visser et/ou la position d'au moins une paire d'éléments à complémentarité de forme, et/ou sur la face extérieure de la tête à visser ou du corps à visser étant présent au moins un repère scanbody (97).
